# EUROPEAN PATENT APPLICATION

(11) **EP 3 213 637 A1**
(43) Date of publication of application: **06.09.2017**
(21) Application number: 15851375.4
(22) Date of filing: 14.10.2015
(51) Int. Cl.: A01N 63/04, A01P 7/04

(54) **COMPOSITION OF PARASITOID INSECTS AND ENTOMOPATHOGENIC FUNGI, ENTOMOPATHOGENIC FUNGUS DISSEMINATION AND/OR VECTORISATION METHOD, USE OF THE COMPOSITION AND BIOLOGICAL AGRICULTURAL PEST CONTROL METHOD**

(30) Priority: 14.10.2014 BR 14256040
(71) Applicant: Giglioti, Éder Antônio, 17800-000 Adamantina (BR)
(72) Inventor: SUARDI, Carlos Zanon, 17860-000 Pacaembu (BR); BOVI, Elaine Cristina Vicente, 17830-000 Flórida Paulista (BR); RODRIGUES, Francine Carla Morini, 17800-000 Adamantina (BR); VICENTE, Geovane César Bovi, 17830-000 Flórida Paulista (BR); LIMA, Inajara Dos Santos, 17830-000 Flórida Paulista (BR); OLIVEIRA, Maria Luisa De, 17810-000 Mariápolis (BR); DURAN, Mariza Lopes, 17780-000 Lucélia (BR); ROMUALDO, Rosângela Marques, 17760-000 Inúbia Paulista (BR); BOVE, Simone Ribeiro Da Silva, 17830-000 Flórida Paulista (BR)
(74) Representative: Potter Clarkson LLP
(86) International application number: PCT/BR2015/050182
(87) International publication number: WO 2016/058074

(57) **Abstract**

The present invention relates to a new biological control method comprising at least one predator or parasitoid insect population and at least one entomopathogenic fungus population, as well as a carrier that is acceptable in pesticides. The present invention further relates to a new method for disseminating an entomopathogenic fungus population, and to the use of a composition comprising a predator or parasitoid insect population and an entomopathogenic fungus population, or to the dissemination system for pest control in agricultural crops.

## Description

### FIELD OF THE INVENTION

The present invention relates to the biological control of agricultural pests. More specifically, the present invention relates to a composition of parasitoid insects and entomopathogenic fungi for the biological control of agricultural pest. Additionally, the present invention further relates to a system of dissemination and/or vectorization of entomopathogenic fungus, use of said composition and method for biological control of agricultural pest.

### BACKGROUND OF THE INVENTION

Scientific advances and technological innovations have improved agricultural productivity, but have become a model dependent on external inputs and unsustainable in the long run. Moreover, conventional agriculture and pest control methods commonly have negative impacts on components of agro-ecosystems, especially on beneficial fauna and environment, making it necessary to seek new approaches to solve the problems of modern industrial agriculture.

Pest damage has increased the importance of natural enemies because of the negative social and ecological impacts and costs of chemicals in the environmental.

Biological control consists of the use of an organism (predators, parasitoids and pathogens) which causes damage by attacking pests in crops. They are called population control agents and occur naturally in ecosystems. Cultural practices such as genetically uniform plants in monocultures, extensive and uniform planting of susceptible cultivars and application of fertilizers at concentrations that favor the increase of insect density have strengthened the destructive potential of plant pests.

Biological control includes conservation, inoculation and/or flooding of natural enemies in an environment. Conservation is an indirect method and corresponds to the management of agro-ecosystem to ensure the preservation of natural enemies aiming at restoring or promoting natural biological control. It is wise to consider the action of the natural biological control and seek the conservation of natural enemies in different agro-ecosystems, particularly those less impacted and ecologically fragile, as in the case of the Amazonians.

The success of biological pest control programs depends on the uniform production of natural enemies with high biological and reproductive performance and is efficient after filed clearance.

Biological control of insects is not a recent technique. Since the century III B.C., predatory ants were used by the Chinese to control pests on citrus plants. In medieval Arabia, farmers used colonies of predatory ants for the control of phytophagous ants in palm trees.

The first microbial control work using entomopathogenic fungus was carried out by the zoologist and pathologist Ilya Metchnikoff in 1879, who applied *Metarhizium anisopliae* to control larvae of a Curculionidae, an important beet pest. Krassilstschik continued the research, producing about 55 kg of the fungus in 1884, achieving a control of 55 to 80% of the insects in small areas after 10 to 15 days of application.

The studies with entomopathogenic fungus in Brazil started in 1923, when two species of spittlebugs infected by the fungus *Metarhizium anisopliae* were identified. This fungus was used to combat the spittlebug *Tomaspis liturata* in the first spray work carried out in the country. (ALVES; FARIA, 2003).

The entomopathogenic fungi are microorganisms that cause disease in insects, which are responsible for 80% of the diseases that result in epizootic outbreaks of ecosystems and agro-ecosystems and are easier to disseminate, since some species have the capacity to penetrate through the integrated cuticle of arthropods and directly reach the hemocele, even in the case of cochines with carapace.

There are important fungi in the biological control of field-level pests. Among them, the species *Metarhizium anisopliae, Beauveria bassiana* and *Nomuraea rileyi* are the most common in agricultural ecosystems.

The fungus *Metarhizium* is a deuteromycete of Moniliaceae family that is characterized by attacking a large number of insect species. Widely distributed in nature, it can be easily found in soils, where it survives for long periods. The attacked insects become hard and covered with a powdery layer of conidia. At the end of conidiogenesis the corpse can show green tones that vary from light to dark gray or off-white with green spots.

It is believed that the genus *Metarhizium* occur naturally on more than 300 species of insects of different orders, including important pests.

According to ST. LEGER *et al.* (1996), in his article entitled "Construction of an improved mycoinsecticide overexpressing the toxic protease", the infection process of the fungus *Metarhizium anisopliae* on the host depends on a sequence of mechanical and biochemical events occurring in a synchronized way by deposition of conidia on the host cuticle, followed by germination of conidia, penetration through the cuticle given by mechanical and enzymatic action, invasion, colonization of the body of the insect and production of toxins, externalization of fungal structures, production of conidia on the host carcass and dissemination. Colonization and infection time may vary depending upon the host and environmental conditions. More specially, ALVES, (1998b) described that this cycle has the following phases: adhesion, germination, formation of appressory, formation of penetration clip, penetration, colonization, reproduction and dissemination of the pathogen.

The genus *Beauveria* is a parasite of a large number of arthropods, occurring in more than 200 species of insects and mites, including caterpillars and even ticks. The individuals attacked are covered by white mycelium that sporulates under adequate conditions of humidity and light.

The species *Beauveria bassiana* is widespread in all countries, being the most frequent on insects and soil samples, where it can survive for long time in saprogenesis. This was the first fungus to be studied in detail by the Agostino Bassi. In laboratory conditions, it can colonize most insects, and in the field occurs in the enzootic and epizootic form in Coleoptera, Lepidoptera, Hemiptera and enzootic occurrences of Diptera, Hymenoptera and Orthoptera.

According to Robinson's work (1966), infection usually occurs through the integument, wherein the fungus germinates within 12 to 18 hours depending on the presence of nutrients represented by glucose, chitin, nitrogen, etc. Oral infection can occur for some insects, such as the case of *Solenopsis spp.* it is also possible to penetrate the respiratory system through the spiracles. The cutaneous penetration occurs due to mechanical and chemical action (enzyme), which takes about 12 hours. After 72 hours of inoculation, the insect has been completely colonized with enough fatty tissue attacked, going to the intestinal tissue, Malpighian tubules, etc., arising death due to lack of nutrients and the accumulation of toxic substances. On the corpse, occurs the formation of large conidiophores and conidia characteristic of the species, and inside them, besides the fungal structures, occurs crystals of different toxins.

Barson (1977) commented in his article entitled *"Laboratory evaluation of Beauveria bassiana as a pathogen of the larval stage of the large elm beetle bark, Scolytus Scolytus*" that favorable conditions for the development of *Beauveria* on insects are relative humidity around 90% and temperature in the range from 23 to 28°C, the minimum and maximum growth limit being approximately 5 to 35°C, respectively, depending on the fungal isolate. High and low temperatures delay the development of disease. Higher temperatures are more harmful to the pathogen which has been referred to cause infections in temperatures of 0 to 5°C.

The genus *Nomuraea* is characterized by presenting septate mycelium and conidiophores with phialides originating from the same point.

The species *Nomuraea rileyi* occurs naturally on pest of some economic crops. In many regions of the world, the growth of fungus in culture medium is characterized by an initial yeast-like stage "similar to bacterial culture" whose duration varies according to nutrition, being 1 to 2 days in the medium with chrysalis meal and 4 to 5 days in SMAY, in which it is slowly transformed into mycelium with abundant or spare sporulation.

Alves (1998) described in his article that the fungus penetrates the insect, often through the integument using mechanical pressure and enzymatic activity resulting from the secretion of proteases, lipases and chitinases. Oral contamination has also been reported in *Anticarsia gemmatalis* caterpillars.

The complete fungal cycle on *Trichoplusia ni* caterpillars is 8 to 12 days at 25°C. According to Ignoffo (1981), the germination can occur within 12 hours and the hemocele invasion in 24 hours. Colonization of the host last for about 3 to 5 days and death can occur within 6 to 7 days. Conidiophores and conidia form 8 to 12 days after onset of infection.

The *N. rileyi* fungus has been extensively studied in recent years for its use in pest control. This pathogen occurs in more than 32 insect species of the *Coleoptera, Lepdoptera* and *Orthoptera* orders. About 90% of *N. rileyi* hosts belong to the *Lepdoptera* order.

In Brazil, soybean farmer are aware of the great efficiency of fungus *N. rileyi* in the natural control of *A. gemmatalis* during rainy periods and under mild temperatures. These pathogens have caused epidemics in populations of pests, providing a satisfactory control and contributing to diminish the use of pesticides.

One of the biological control projects using entomopathogenic fungi in Brazil is the *Mahanarva posticata* and *Mahanarva fimbriolata* spittlebugs that are included among the main sugarcane pests, with the entomopathogenic fungus *Metarhizium anisopliae.* In Brazil, these pests causes economic losses in crops located in the states of São Paulo (*M*. *fimbriolata*)*,* Rio de Janeiro, Espirito Santo, and in the northeast region where only the *M. posticata* species affects approximately 800,000 hectares of the crop. In this region, it causes losses of 11% in agricultural production and 15% in industrial income.

The inoculum from fungus applications serves to contaminate the first nymphs or adults who, after death, fall into cane leaf cartridge or into the sheaths of the upper leaves of the pointer. In these places, the fungus spores on the corpses, being carried by rainwater, dew or wind to other parts of the plant. At that time, the new nymphs that hatch from the eggs placed on old leaves, on the ground or in the base leaves of the plants are going up the stem toward the cane leaf cartridge when in contact with a high amount of inoculum produced by the corpses. In addition, the abundant foam released by nymphs creates a favorable environment for the pathogen. Many of these nymphs die forming the primary foci of disease and others develop in contaminated adults who spread the disease through the sugarcane fields.

Another example of pest control with entomopathogenic fungi is the control of the banana root borer, *Cosmopolites sordidus,* which is one of the main pests of banana crop, with the fungi *Metarhizium anisopliae* and *Beauveria bassiana,* and the latter has giving better results. Both larvae and adults open galleries on rhizome and pseudo stem base. The damages due the reduction in size of bunches can reach 50% of production. Besides this loss, the attack of the pest increases the fall of banana trees and also favors the attack of the fungus that causes the Panama disease. This pest is disseminated in all banana producing regions.

Predators during their life cycle can consume several prey. They are usually more generalist because attack different species, which may belong to different families or orders, including insect pests or not. Parasitoids are in general more specific, i.e. specialized to certain hosts. Thus, they are usually more restricted to the species, family or order.

According to Berti Filho & Ciociola (2002), the impact of predators is more difficult to evaluate than the parasitoids, since these can be observed in their hosts, while predators hardly leave any signs of attack, especially when they consume the whole prey. Unlike predators, the parasitoids have a high capacity to find hosts, even when the population density of phylum phages is low. An example of a successful biological control through parasitoid insect is the control of *Diatraea saccharalis* using *Cotesia flavipes.* Considered as originating from the Asian region, parasitizing insects on crops such as corn and rice, *Cotesia flavipes* was exported to the "New World" to control *D. saccharalis* in sugarcane.

MOUTIA & COURTOIS (1952) have already described in the paper entitled "Parasites of the moth-borers of sugar-cane in Mauritiu" that *Cotesia flavipes* is gregarious with endoparasitoid with holometabolic development. Its life cycle has approximately 20 days. It reproduces sexually or by arrenotic parthenogenesis. In the first case, the fertilized females deposit eggs that give rise to descendants of both genders in the proportion of approximately 1:1. In the case of arrenotic parthenogenesis, the offspring are 100% composed by males hatching from unfertilized eggs.

In Brazil, it was introduced in 1971, imported from Trinidad and Tobago by Esalq/SP and COPERSUCAR. However, only in 1974 mass creation and liberation has began (Gallo *et al.,* 2002). In 1978, additional strains were brought from India and Pakistan (Macedo, 1978). *Cotesia flavipes* is responsible for the largest biological control program in the world, and in Brazil, more than 2 million hectares receive this measure for the control of *Diatraea saccharalis.*

The wasp locates *D. saccharalis* and by means of its ovipositor inserts eggs on caterpillar (inoculation), depositing 60 to 65 eggs. Egg deposition occurs on hemocele of caterpillars. After three or four days the larvae hatch, which pass through three instars, over a period of approximately four to twelve days. Third-instar larvae are bright milky-white and 10 to 15 days after inoculation pierce the caterpillar's integument and kill it. The larvae turn into pupa very close to *D. saccharalis* caterpillar and are coated by white colored cocoons that form a white mass. Adults are black and have 2 to 3 mm.

The idea that the higher the consumption of pesticides, the greater the agricultural produce of a country is changing. Currently, the ecological cost of using these products is considered. An awareness of the adversities caused by the abusive use of pesticides is generating a search for healthier foods by consumers, thus allowing organic agriculture to grow significantly. Alternative agriculture is likely to increase considerably in developing countries. Currently, in Brazil, the area cultivated with organic agriculture is only 100 hectares, while in Europe exceeds 2 million hectares.

Biological control systems are widely used to control insects that are harmful to agricultural crops. The most important pest species in agricultural crops such as, for example, sugarcane, soybeans, coffee, corn, tomato, sorghum, wheat and rice, are termites (*Hetterotermes tenius, Hetterotermes longiceps, Procornitermes triacifer*), beetles (*Migdolus fryanus*), sugarcane borer (*D. saccharalis*), cornstalk borer (*Elasmopalpus lignosellus*), root froghopper (*Mahanarva fimbriolata*), sugarcane weevil (*Sphenophorus levis*), velvetbean caterpillar (*Anticarsia gemmattalis*), cotton bollworm (*Helicoverpa armigera*), soybean looper (*Pseudoplusia includens*)*,* bean shoot moth (*Epinotia aporema*)*,* southern green stink bug (*Nezara viridula*)*,* stink bug (*Piezodorus guildinii*), neotropical brown stink bug (*Euschistus heros*), white coffee leaf miner (*Perileucoptera coffeella*), coffee seed borer (*Hypothenemus hampei*), imperial moth (*Eacles magnificent imperialis*)*,* green scale (*Coccus viridis*), hemispherical scale (*Saissetia coffeae*), chain cochineal (Cerococcus catenarius), citrus mealybug (*Planococcus citri*), citrus orthezia (*Orthezia praelonga*), cochineal root (*Dysmicoccus cryptus*), fly root (*Chiromyza vittata*), southern red mite (*Oligonychus ilicis*), passionvine mite (*Brevipalpus phoenicis*), dark sword-grass cutworm (*Agrotis ipsilon*), fall armyworm (*Spodoptera frugiperda*), small mocis moth (*Moeis latipes*), spittlebug-of-pastures (*Deois flavopicta*), maize planthopper (Peregrinus maidis and *Dalbulus maidis*), corn leaf aphid (*Rhopalosiphum maidis*), corn earworm (*Helicoverpa zea*), tomato leafminer (*Tuta absoluta*), silverleaf whitefly (*Bemisia argentifolii*), tomato russet mite (*Aculops lycopersici*), leaf miner (*Liriomyza huidobrensis, L. trifolii, L. sativae*), thrips (Frankliniella spp. and Thrips spp.), American bollworm (*Helicoverpa zea*), Egyptian cotton leaf worm and fall armyworm (*Spodoptera littoralis* and S. *frugiperda*), small tomato borer (*Neoleucinodes elegantalis*), Epicauta bug (*Epicauta suturalis* and *E. attomaria*), beetle (*Conoderus scalaris*), beetles (Eutheola, Dyscinetus, Stenocrates, Diloboderus, Cyclocephala, Phytalus and Phyllophaga) brown stink bug (*Scaptoris* castanea), sorghum midge (*Stenodiplosis sorghicola*), leaf-footed bug (*Leptoglossus zonatus*), southern green stink bug (*Nezara viridula*), neotropical red-shouldered stink bug (*Thyanta perditor*), sorghum stink bug (*Carmelite sthenaridea*), rice stink bug (*Oebalus* spp.), *Pseudaletia sequax,* rice stalk stink bug (*Tibraca limbativentris*), rice stink bug (*Oebalus ypsylon griseus* and *O*. *poecilus*).

These pests can be controlled with predator or parasitoid insects of the families: Syphidae, Tachinidae, Chrysopidae, Vespidae, Aphelinidae, Bethylidae, Braconidae, Chalcididae, Encyrtidae, Eulophidae, Ibaliidae, Ichneumonidae, Scelionidae, Trichogrammatidae, Forficulidae, Amthocoridae, Hemiptera, Nabeidae; Pentatomidae, Redoviidae, Carabidae, Coccinellidae and Chrysopidae.

In the absence of predators, these pest species are able to establish and maintain in crops which provide the ideal factors for their development, such as sugarcane (*Saccharum officinarum*), coffee (*Coffea arabica*), soybean (*Glycine max*), sorghum (*Sorghum spp*.), rice (*Oryza sativa*) and corn (Zea *mays*). In this way, the predator or parasitoid insects and entomopathogenic fungi must be deployed immediately after the pest is observed to prevent a high rate of infestation and to keep the pest population under control. In addition, predator or parasitoid insects and entomopathogenic fungi are able to survive and continue to develop in the target pest itself after it has been controlled.

With the application of the composition of a predator or parasitoid insect population and entomopathogenic fungus population, excellent results will be obtained due to the fact that the predator or parasitoid insects go directly to the target (pest) carrying entomopathogenic fungus spores in their body, thus, a higher gain in the pest control in the agricultural crops with a lower cost of implementation. In agricultural crops in which the entomopathogenic fungus spores and predator or parasitoid insect are not freeiy available, such as virgin crops, where no type of crop has ever been planted, the pest rate will be higher. In these cases, an alternative to control these pests would be the use of chemical pesticides that would attack not only the pest but also any possible natural enemy of the pest, besides causing a major environmental impact and having a high cost. Another alternative would be a biological control with the use of predator or parasitoid insects following the use of entomopathogenic fungi, generating a high cost in the application. The composition will act with both methods of biological control together, having a greater efficiency by bringing direct entomopathogenic fungal spores to the target with greater control efficiency and a cost below the separate applications.

To release predator or parasitoid insects, a sampling is performed to determine the population density of the target pest, which will determine the number of individuals that must be released in the area. After a few days of the release, a new sampling is performed to determine the control rate of the target pest.

In the case of entomopathogenic fungus, the most common application method is spraying, with aerial spraying being the most used technique, which generates a very high cost of transportation and storage of entomopathogenic fungus, which must be done in a refrigerator truck, manpower to prepare the application syrup and the biggest cost would be the use of airplane with high costs associated with fuel, maintenance and manpower of the pilot. One of the complications of aerial application is the climatic conditions necessary for application, being days with high relative humidity, preferably with drizzle so that fungus can reach its target, which does not occur with the compound developed, since the predator or parasitoid insects leads the entomopathogenic fungal spores directly to the target.

One of the fundamental conditions for the consolidation of entomopathogenic fungus in the host is a steady adhesion of the spores in the insect cuticle.

Recent studies show that certain practical considerations must be taken in relation to the application of entomopathogenic fungi, for example, some formulations using blastospores probably must contain aqueous or non-polar liquids that may prove to be more successful in the biological control of certain hosts if compared with air conidia. In contrast, the use of detergents In order to prevent the aggregation of aerial conidia can be harmful during the application, because the presence of detergent may decrease the adhesion to surfaces, thereby generating a major drawback to the current systems of application of entomopathogenic fungi.

Brazilian Patent Application PI 0504136-8 A2, filed on June 24, 2005, on behalf of DEPARTMENT OF BIOCHEMISTRY and UNIVERSITY OF MYSORE, entitled "PROCESS FOR PREPARING A BIOPESTICIDE FORMULATION" describes the process for the preparation of a biopesticides formulation for use against the coffee berry borer (CBB) using an economical and easy release formulation containing the entomopathogenic fungus *Beauveria bassiana.* The claimed composition is prepared from fungi isolated from a dead specimen of the coffee berry borer which are cultivated in liquid medium, purified, and prepared in a powder formulation for use in coffee cultures. As can be seen, Document PI 0504136-8 provides a composition containing only an entomopathogenic fungus (*Beauveria bassiana*) isolated, cultivated and prepared in a powder formulation for use in coffee crops to prevent damage caused by coffee berry borer (CBB). Document PI 0504136-8 does not mention or suggest the use in conjunction with other entomopathogenic fungus or a parasitoid insect for dispersion of the claimed composition in coffee crops.

Brazilian Patent Application PI 9205513-3 A2 (corresponding to US Application No. 9,200,033), filed on January 9, 1992 on behalf of James E. Wright (US), Laurence D. Chandler (US) and the Tyrone A. Knauf (US) entitled "Biologically pure culture of *Beauveria bassiana,* composition and process for controlling pest biopesticide composition and elemental composition" refers to a biopesticidal composition for controlling insect pests in cotton crops comprising an entomopathogenic fungus, an arresting and feeding stimulant, and optionally a pheromone, for example, sexual pheromone. The insect pests mentioned in this Document are cotton weevil (*Anthonomus grandis,* also known as cotton boll weevil), cotton flea (*Pseudatomoscelis seriatus*) and whitefly sweet potato (*Bemisia tabaci*). The entomopathogenic fungi mentioned in the description of this Document used in the composition are *Beauveria bassiana*, *Metarhizium anisopliae* among others, although the examples of embodiment of the invention show use only the former. As noted, Document PI 9205513-3 provides a composition containing only one entomopathogenic fungus in conjunction with other components. Document PI 9205513-3 uses components such as feed stimulants and pheromone to attract the pest to bait in the form of liquid, powder, granules or small particles, where it is inoculated with entomopathogenic fungus of the composition. Thus, Document PI 9205513-3 does not mention or suggest the use in conjunction with other entomopathogenic fungus or a parasitoid insect for dispersion of the composition claimed in coffee cultures. It should also be noted that Document PI 9205513-3 provides for combating different pests (cotton weevil (*Anthonomus grandis*, also known as cotton boll weevil), cotton flea (*Pseudatomoscelis seriatus*) and whitefly sweet potato (*Bemisia tabaci*)) in a culture of cotton plants, differing from the present invention.

Brazilian Patent Application PI 9008037-8 A2 (corresponding US application No. 9,005,246), filed on September 14, 1990, on behalf of ECOSCIENCE CORPORATION (US) and entitled "Apparatus for insect control and process to increase the mortality rate of a species as an insect target" refers to the biological pest control comprising the use of entomopathogenic fungi in an infection chamber for insect control. Preferred fungi for use in the composition are *Metarhizium anisopliae* and *Beauveria bassiana.* The pest insects presented in the examples of Document PI 9008037-8 are *Blatella Germanic* (German cockroach), *Periplaneta americana* (American cockroach), *Fannia canicularis* (little housefly), *Musca domestica* (housefly) and *Diabrotica undecimpunctata* (adult pest form Spotted cucumber beetle). Document PI 9008037-8 provides the use of an infection chamber which maintains the spores of the entomopathogenic fungi *Beauveria bassiana* and *Metarhizium anisopliae* protected from environmental conditions to which the insects are attracted and inoculated. Fungi are grown within said chambers so as to continuously produce spores and prolong its effect. Although Document PI 9008037-8 used in its exemplary embodiment a composition containing the same entomopathogenic fungi of the present invention for controlling an agricultural pest, Document PI 9008037-8 does not provide the use of a parasitoid insect for the dissemination of the composition.

Brazilian Patent Application PI 0400297-0 A2, filed on March 19, 2004, on behalf of OTÁVIO JOSE MARIANO SILVA, NELSON GASTALDO and GLÁUCIO ADRIANDO CARRIT ANTIGA and entitled "Method and defoamer to control leafhoppers in sugarcane, grasses pastures, corn, rice and other grasses" refers to a formulation which acts as a destructuring and defoaming agent of the foam produced by nymphs of *Mahanarva fimbiolata* spittlebugs comprising chemicals such as described in the specification, together with *Metarhizium anisopliae* spores to control this pest (*Mahanarva fimbiolata*) in sugarcane crop and pasture grasses. The formulation of Document PI 0400297-0 provides for destabilization of the foam produced by nymphs of *Mahanarva fimbiolata* spittlebugs which thus become unprotected and are inoculated by entomopathogenic fungus *Metarhizium anisopliae* present in the composition. Although the composition of Document PI 0400297-0 provides for its use in pests other than those described herein, the Document intended to be used in the same agriculture crop, namely, sugarcane crops. The present invention relates to a method for biological control of agricultural pests comprising biological compositions containing at least one population of entomopathogenic fungi selected from *Metarhizium anisopliae* and *Beauveria bassiana* in combination with at least one predator or parasitoid insect population, preferably *Cotesia flavipes,* which is commonly used in the control of *D. saccharalis* (sugarcane borer).

International Patent Application WO 2008087294 A2, filed on July 24, 2008; on behalf of NATURAL PLANT PROTECTION entitled "Use of entomopathogenic fungi as biological control of *Paysandisia archon*" refers to the use of entomopathogenic fungus *Beauveria bassiana* for the control and prevention of damage caused by the pest *Paysandisia Archon* (order Lepidoptera, family Castniidae). The invention also relates to the use of said fungus for treating plants against infestation by *Paysandisia archon.*

International Patent Application WO 2011117351 A1, filed on September 29, 2011 on behalf of GEORG- AUGUST-UNIVERSITÀT GÕTTINGEN and entitled "Biopesticide and method for pest control" describes a methodology for pest control and provides for the inoculation of plants and parts of plants with an effective amount of the entomopathogenic fungus *Beauveria bassiana.* Document WO 2011117351 further provides biopesticides and compositions for pest control, in particular the control of herbivorous insects and/or plant pathogens. The Document mentions that, at the time of this Application (2011), *Beauveria bassiana* was used as standard biopesticide. In WO 2011117351, the methods of application may be in the form of solutions, dispersions, sclerodes, gel, cream, seed coating, baths, etc. The application method of the present invention is based on the dissemination of a parasitoid insect together with at least one entomopathogenic fungus, which is more efficient as the predator or parasitoid insect visit various pests, thus transporting efficiently and with low cost, the spores of entomopathogenic fungi directly to the agricultural pests.

International Patent Application WO 2013026114 A1, filed on February 28, 2013; on behalf of FMC QUÍMICA DO BRASIL LTDA. and entitled: "Agrochemical composition, uses and method of preparation thereof, as well as a method to ensuring high crop yields" describes a synergistic composition comprising a plant growth regulator and/or a fungicide and/or insecticide and/or acaricide and its preparation process. The pesticide component claimed in WO 2013026114 is selected from a group containing 'biological' components, among others. The list of biological components includes *Metarhizium anisopliae.* Document WO 2013026114 relates to the preparation of a synergistic composition and its use to ensure high productivity of corn crop, reducing the overgrowth of corn plants and strengthening its root system and adventitious roots. The combat against diseases and pests is also foreseen, since the increased density creates an environment conducive to the growth of pests and diseases that do not normally affect this type of culture. In this context, *Metarhizium anisopliae* is used as biological insecticide and combats the sugarcane borer pest *Diatraea saccharalis,* among others. The main objective of WO 2013026114 is to produce a composition which enables the reduction of excessive growth of corn plants, since corn plants tend to grow too much in search of light and as a result, break and fall, causing significant losses in productivity. A reduction in the growth of corn plants leads to the strengthening of its root system and roots, creating a microenvironment conductive to disease development and pest growth. The claimed composition also provides a fungicide and/or insecticide and/or acaricide to combat and confer resistance to diseases and pests. Finally, it should be noted that although the composition claimed in WO 2013026114 comprises in its composition biological agents, such as *Metarhizium anisopliae* in combating the development and growth of pests, including *Diatraea saccharalis,* the aforementioned Document has a main objective to reduction in the excessive growth of corn plants.

International Patent Application WO 2012171914 A1, filed on June 12, 2012; on behalf of BAYER INTELLECTUAL PROPERTY GMBH is entitled "Use of an enaminocarbonyl compound in combination with a biological control agent" refers to the use of a composition comprising enaminocarbonyl compounds selected from Formula (I) together with at least one agent of biological control selected from a group containing entomopathogenic fungi, among other biological agents for pest control in crop plants, including sugarcane. The WO 2012171914 descriptive report mentions the use of entomopathogenic fungus *Metarhizium anisopliae.* The present invention relates to a method for biological control of agricultural pests comprising biological compositions containing at least one population of entomopathogenic fungi selected from *Metarhizium anisopliae* and *Beauveria bassiana* in combination with at least one predator or parasitoid insect population preferably *Cotesia flavipes,* which is commonly used in controlling *D. saccharalis* (sugarcane borer). In WO 2012171914, the application methods can be: seed coating, soil drenching, directly into soil grooves and/or foliar spraying. The application method of the present invention is based on the dissemination of a parasitoid insect together with at least one entomopathogenic fungus, which is more efficient as the predator or parasitoid insect visit various pests, thus transporting efficiently and at low cost, the spores of entomopathogenic fungi directly to the agricultural pests.

European Patent Application EP 2540165 A1, filed on June 30, 2011; on behalf of BAYER CROPSCIENCE AG., entitled "Use of a halogenated pesticide in combination with a biological pest control agent" refers to the use of a composition comprising halogenated compounds selected from Formula (1) together with at least one biological control agent selected from a group containing entomopathogenic fungi for the control of agricultural pests on ornamental plants, lawns and forest trees, such as forest trees for feed, fuel and industrial purposes. The use of this preparation is advantageous because it extends the spectrum of activity for other agricultural pests and/or agricultural pest strains resistant to pesticides. The disclosure of EP 2540165 mentions the use of the entomopathogenic fungi *Beauveria bassiana* and *Metarhizium anisopliae,* the latter being preferred in combination with halogenated compounds selected from Formula (I). The present invention relates to a method for biological control of agricultural pests comprising biological compositions containing at least one population of entomopathogenic fungi selected from *Metarhizium anisopliae* and *Beauveria bassiana* in combination with at least one predator or parasitoid insect population preferably *Cotesia flavipes,* which is commonly used in controlling *Diatraea saccharalis* (sugarcane borer). In document EP 2540165, the application methods can be: seed coating, soil drenching, directly into soil grooves and/or foliar spraying. In particular, the methods of application by immersion, spraying, irrigation, evaporation, dusting, fogging, broadcasting, foaming, painting, spreading, dispensing, and drip irrigation are mentioned in the specification. The application method of the present invention is based on the dissemination of a parasitoid insect together with at least one entomopathogenic fungus, which is more efficient as the predator or parasitoid insect visit various pests, thus transporting efficiently and at low cost, the spores of the entomopathogenic fungi directly to the agricultural pests. Finally, it should be noted that examples of embodiment of the invention disclosed in EP 2540165 do not mention the use of entomopathogenic fungi *Metarhizium anisopliae* and *Beauveria bassiana,* described as in the present invention, or make any suggestion or description of the use of an entomopathogenic insect for use on dissemination of the pleaded composition.

The summary work (PT.03.32) by Simi LD, Batista Filho A, Almeida AMB, Schmidt FS and Almeida JEM, entitled "Interaction of *Metarhizium anisopliae* and *Cotesia flavipes* on mortality of sugarcane borer *Diatraea saccharalis*", presented at the 12th SICONBIOL, Biological Control Symposium from July 18 to 21, 2011 refers to the biological control of *Diatraea sacharalis* (sugarcane borer) performed with the parasitoid *Cotesia flavipes,* together with the use of the entomopathogenic fungus *Metarhizium anisopliae.* At the end of the summary, the authors state that "pre-treatment with the fungus (*Metarhizium anisopliae*) does not influence the parasitism bty hymenopteran (*Cotesia flavipes*), being possible to simultaneously use both techniques without reducing the efficiency of both in the control of *Diatraea saccharalis*". Pre-treatment means that the fungus can be used before the release of *Cotesia flavipes* wasp in the field. In the control of the borer, several measures are used for the Integrated Pest Management. The said document, when said, concomitantly, is saying that the two control methods, *Metarhizium* and *Cotesia* can be used in the same cycle of the sugarcane crop, without interfering in the other. It is clear methodology when the authors describe that "Third-instar caterpillars were sprayed under Potter Tower with 1 mL of isolate IBCB 425 of *Metarhizium anisopliae* at concentration of 10⁸ conidia.mL⁻¹ and after 24 hours were submitted to parasitism by C. *flavipes.* The reverse process was also performed, initially subjecting the caterpillar to parasitism and spraying them with fungus after 24 hours". Therefore, the work deals with subsequent control. It is extremely common in Integrated Pest Management to use more than one phytosanitary measure to control pests. Even for controlling sugarcane borer (*D. saccharalis*), it is common to use up to five methodologies (*Trichogramma, Cotesia flavipes,* Saline, Insecticide, entomopathogenic fungus). At no point the aforementioned treats, describes or much less suggests that *Cotesia flavipes* act as a vector and disseminator agent of the *Metarhizium anisopliae,* as stated in the present invention.

The PhD Thesis of Cinthia Conceição Matias da Silva (under the guidance of Professor Edmilson Jacinto Marques) entitled "Association of *Cotesia flavipes* (CAM.) with *Metarhizium anisopliae* (METSCH.) SOROK. and *Beauveria bassiana* (BALS.) VUILL in controlling sugarcane borer *Diatraea flavípennella* (BOX) (Lepidoptera: CRAMBIADAE)" presented in February 2013 to the Postgraduate Program in Agricultural Entomology, Federal Rural University of Pernambuco, as part of the requirements for obtaining Ph.D of Agricultural Entomology refers to the association of parasitoid insect (*Cotesia flavipes*) with entomopathogenic fungi *Metarhizium anisopliae* and *Beauveria bassiana* in the control of sugarcane borer *Diatraea flavipennella*, since the use of *Cotesia flavipes* in controlling this type of pest has been questioned due to the increasing dominance of this species in the analyzed region (sugarcane fields of Pernambuco). In Chapter 1, referring to the Introduction and Literature cited, the author states that the "objective of this study was to evaluate the performance of *C. flavipes* together with *M. anisopliae* and *B. bassiana* on sugarcane borer". When author uses the word together means the use of three biological agents to control the borers, but always the use of one after another. This is clear in Chapters 3 and 4 with i) the interaction of entomopathogenic fungi with the parasitoid *Cotesia flavipes* and ii) the effect of *Metarhizium anisopliae* and *Beauveria bassiana* at different stages of development of the parasitoid *Cotesia flavipes,* respectively. In Chapter 3, it is clear that the fungi were applied on the caterpillars with fungal suspensions obtained by addition of 10 mL of sterile distilled water plus adhesive spread. In Chapter 3, the author states that when used together in Treatment 4, the caterpillar were inoculated with *Cotesia flavipes*, and after one day, sprayed with *M. anisopliae* suspension. In Treatment 5 the caterpillars were sprayed with *M. anisopliae* and after one day, inoculated with *C. flavipes.* In Treatment 6, the caterpillar were inoculated with *C. flavipes*, and after one day, inoculated with *B. bassiana.* In Treatment 7, the caterpillar were inoculated with *B. bassiana* and after one day, inoculated with *C. flavipes.* Furthermore, the author states that the fungi were applied on the caterpillars with fungal suspensions obtained by addition of 10 mL of sterile distilled water plus 0.01% Tween 80 adhesive spreader adjusted to a concentration of 10⁷ conidia.mL⁻¹. Therefore, fungal inoculations have always occurred before or after inoculation with *C. flavipes.* At no point was a composition of *Cotesia flavipes* proposed to act as a vector and disseminator of the *Metarhizium* and *Beauveria* fungi.

As can be seen, no prior art document describes or suggest a composition of parasitoid insects and entomopathogenic fungi for the biological control of agricultural pests as presented by the present invention.

### SUMMARY OF THE INVENTION

To overcome the above-mentioned problems, the present invention will provide significant advantages over already existing biological agricultural pests control methods, enabling an increase in performance and a more favorable cost-benefit ratio.

The present invention, according to a first aspect, relates to a novel biological control method comprising at least one predator or parasitoid insect population and at least one entomopathogenic fungal population.

According to the second aspect, the present invention relates to a novel method for the dissemination of at least one entomopathogenic fungal population.

According to the third aspect, the present invention relates to a composition of at least one predator or parasitoid insect population and an entomopathogenic fungal population for pest control in agricultural crops.

According to the fourth aspect, the present invention relates to the use of a composition of at least one predator or parasitoid insect population and an entomopathogenic fungal population or to the dissemination system for pest control in agricultural crops.

### BRIEF DESCRIPTION OF THE DRAWINGS

The structure and operation of the present invention together with further advantages thereof may be better understood by reference to the accompanying drawings and the following descriptions:
Figures 1 to 17 show graphs of *C. flavipes* mortality rate throughout the five days of evaluation when gray masses were inoculated (hatching point);
Figures 18 to 47 show graphs of *C. flavipes* mortality rate throughout the five days of evaluation when were inoculated with different dosages in white mass, gray mass and hatched mass respectively of isolate IBCB 215 and isolate BBIO 195;
Figures 48 to 50 show graphs of *C. flavipes* mortality rate throughout the five days of evaluation when white masses, gray masses and hatched masses were inoculated;
Figure 51 shows the mortality rate data at the different developmental stages of *C. flavipes*;
Figure 52 shows the mean percentage of individuals parasitized by *B. bassiana*;
Figure 53 shows a graph with the average of colonies formed in the composition (wasp + fungus) and control (only wasp);
Figure 54 shows a graph of percentage of parasitism between the composition (wasp + fungus) and *C. flavipes*;
Figure 55 shows a plot of parasitism percentage of entomopathogenic fungus composition and C. flavipes in different inoculation methods;
Figure 56 shows a graph with the percentage of mortality of individuals of the entomopathogenic fungus composition after the third day they were prepared in the different inoculation methods;
Figure 57 shows a plot of the mean number of colonies formed in the entomopathogenic fungus composition in the different inoculation methods;
Figure 58 shows a graph of the amount of conidia carried by the male and female *C. flavipes* individuals in the entomopathogenic fungus composition when prepared in the different inoculation methods;
Figure 59 shows a graph of the average spores germinated per day;
Figure 60 shows a graph with the percent mortality of individuals of the entomopathogenic fungus composition after the third day they were prepared with different amounts of *C. flavipes* individuals;
Figure 61 shows a plot of the mean number of colonies formed in the entomopathogenic fungus composition with different amounts of *C. flavipes*;
Figure 62 shows a graph of the amount of conidia carried by the male and female *C. flavipes* individuals in the entomopathogenic fungus composition when prepared in different amounts of *C. flavipes*;
Figure 63 shows a plot of the parasitism percentage of the entomopathogenic fungus composition and *C. flavipes,* where the entomopathogenic fungus composition was prepared with different amounts of *C. flavipes*;
Figure 64 shows a plot of the mean mortality of *C. flavipes* inoculated with the isolate M1 on days after laboratory inoculation;
Figure 65 shows a plot of the mean mortality of *C. flavipes* inoculated with the isolate M2 on days after laboratory inoculation;
Figure 66 shows a plot of the mean mortality of *C. flavipes* inoculated with the isolate M3 on days after laboratory inoculation;
Figure 67 shows a plot of the mean mortality of *C. flavipes* inoculated with the isolate M4 on days after laboratory inoculation;
Figure 68 shows a plot of the mean mortality of *C. flavipes* inoculated with the isolate M5 on days after laboratory inoculation;
Figure 69 shows a plot of the mean mortality of *C. flavipes* inoculated with the isolate M6 on days after laboratory inoculation;
Figure 70 shows a plot of the mean mortality of *C. flavipes* inoculated with the isolate M7 on days after laboratory inoculation;
Figure 71 shows a plot of the mean mortality of *C. flavipes* inoculated with the isolate M8 on days after laboratory inoculation;
Figure 72 shows a plot of the mean mortality of *C. flavipes* inoculated with the isolate M9 on days after laboratory inoculation;
Figure 73 shows a plot of the mean mortality of *C. flavipes* inoculated with the isolate M10 on days after laboratory inoculation;
Figure 74 shows a plot of the mean mortality of *C. flavipes* inoculated with the isolate M11 on days after laboratory inoculation;
Figure 75 shows a plot of the mean mortality of *C. flavipes* inoculated with the isolate M12 on days after laboratory inoculation;
Figure 76 shows a plot of the mean mortality of *C. flavipes* inoculated with the isolate M13 on days after laboratory inoculation;
Figure 77 shows a plot of the mean mortality of *C. flavipes* inoculated with the isolate M14 on days after laboratory inoculation;
Figure 78 shows a plot of the mean mortality of *C. flavipes* inoculated with the isolate M15 on days after laboratory inoculation;
Figure 79 shows a plot of the mean mortality of *C. flavipes* inoculated with the isolate M16 on days after laboratory inoculation;
Figure 80 shows a plot of the mean mortality of *C. flavipes* inoculated with the isolate M17 on days after laboratory inoculation;
Figure 81 shows a plot of the mean mortality of C. flavipes inoculated with the isolate M18 on days after laboratory inoculation.
Figure 82 shows a plot of the mean mortality of *C. flavipes* inoculated with the isolate M19 on days after laboratory inoculation.
Figure 83 shows a plot of the mean mortality of *C. flavipes* inoculated with the isolate M20 on days after laboratory inoculation;
Figures 84 to 98 show the graphs of *C. flavipes* mortality rate throughout the five days of evaluation when were inoculated with different dosages in white mass, gray mass and hatched mass respectively of isolate IBCB 425;
Figures 99 to 113 show that the isolate MBIO 104 achieved a high mortality rate at 15 and 18 mg dosages at all stages of development of *C. flavipes*;
Figures 114 to 116 show the graphs of *C. flavipes* mortality rate throughout the five days of evaluation when white masses, gray masses and hatched masses were inoculated, respectively;
Figure 117 shows a graph with the mortality rate caused by *Metarhizium spp* over five days, at different stages of development of *C. flavipes*;
Figure 118 shows a plot of the percent parasitism of the entomopathogenic fungus composition and *C. flavipes*, where the composition was prepared with different methods of inoculation of *Metarhizium spp*.;
Figure 119 shows a graph with the percentage of mortality of individuals in the composition after the third day that they were prepared with different methods of inoculation with *Metarhizium spp*.;
Figure 120 shows a plot of the mean colonies formed in the entomopathogenic fungus composition and *C. flavipes* prepared in different methods of inoculation with *Metarhizium spp.;*
Figure 121 shows a graph of the amount of conidia carried by the male and female *C. flavipes* individuals in the composition when prepared in different inoculation methods of *Metarhizium spp*.;
Figure 122 shows individuals of *Diatraea saccharalis* parasitized by *C. flavipes* and *Metarhizium spp*.;

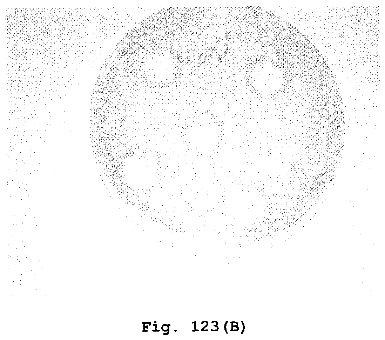

Figure 123 shows *C. flavipes* individuals in Petri dishes (A) with PDA culture medium for evaluation colony formation (B) of entomopathogenic fungi.

### DETAILED DESCRIPTION OF THE INVENTION

While the present invention may be susceptible to different embodiments, preferred embodiments are shown in the following detailed description with the understanding that the present embodiments must be considered as exemplifications of the principles of the invention and are not intended to limit the invention to what has been illustrated and described herein.

The present invention relates to a novel biological control method comprising at least one predator or parasitoid insect population and at least one entomopathogenic fungus population which may be used for creating a biological control agent to be released in an agricultural crop.

According to further aspects, the invention relates to a novel method for vectorization and/or dissemination of entomopathogenic fungi to be directed specifically to the body of the target pests by predator or parasitoid insects.

The present invention also comprises a method for biological pest control in an agricultural crop using the composition to at least one predator or parasitoid insect population and at least one entomopathogenic fungus population and the vectorization and/or dissemination systems according to invention.

The present invention, according to a first aspect, relates to a novel biological control method comprising at least one predator or parasitoid insect population and at least one entomopathogenic fungus population.

According to the second aspect, the present invention relates to a novel method for dissemination of at least one entomopathogenic fungus population.

According to the third aspect, the present invention relates to a composition of at least one predator or parasitoid insect population and at least one entomopathogenic fungus population or dissemination system for pest control in agricultural crops.

According to the fourth aspect, the present invention relates to the use of a composition of at least one predator or parasitoid insect population and at least one entomopathogenic fungus population or dissemination system for pest control in agricultural crops.

In order to better clarify the matter to be protected, the term COMPOSITION was used to describe a composition of parasitoid insects and entomopathogenic fungi for the biological control of agricultural pests.

In an embodiment of the present invention, a composition comprising a predator or parasitoid insect population and at least one entomopathogenic fungus population is prepared in which the entomopathogenic fungus will remain associated with the predator or parasitoid insect, not killing it. In this way, the predator or parasitoid insect directs the entomopathogenic fungus to the target agricultural pest.

With the application of the composition of a predator or parasitoid insect population and entomopathogenic fungus population, excellent results will be obtained due to the fact that the predator or parasitoid insect go directly to the target (pest) carrying in their body entomopathogenic fungus spores, thus having greater efficiency and effectiveness in pests control in agricultural crops with a lower application cost.

The main predators/parasitoids, entomopathogenic fungi, pests, as well as cultures respectively used with the present invention are show in Table 1 below.

**Table 1: Main predators/parasitoids, entomopathogenic fungi, pests respectively used in the present invention.**

| **Predators /Parasitoids** | |
|---|---|
| **Family** | **Genus** |
| *Braconidae* | *Apanteles* |
| | *Cotesia* |
| *Coccinellidae* | *Cryptolaemus* |
| | *Cycloneda* |
| | *Eriopis* |
| | *Hyppodamia* |
| | *Salpingogaster* |
| | *Trichogramma* |

| **Entomopathogenic Fungi** | |
|---|---|
| **Family** | **Genus** |
| Entomophthoraceae | *Batkoa* |
| | *Massospora* |
| Nectriaceae | *Metarhizium* |
| Clavicipitaceae | *Beauveria* |
| | *Nomuraea* |
| Trichocomaceae | *Paecilomyces* |

| **Pests** |
|---|
| *Agrotis SP* |
| *Alabama argillacea* |
| *Anagasta kuehniella* |
| *Anticarsia gemmatalis* |
| *Aphis gossypii* |
| *Bemisia tabassi* |
| *Deois flavopicta* |
| *Diatraea saccaralis* |
| *Diatraea flavipennella* |
| *Helicoverpa spp.* |
| *Heliothis virescens* |
| *Mahanarva fimbriolata* |
| *Mahanarva posticata* |
| *Mythimna unipuncta* |
| *Myzus persicae* |
| *Neoleucinodes elegantalis* |
| *Sacadodes pyralis* |
| *Spodoptera frugiperda* |
| *Tuta absoluta* |
| *Zulia entreariana* |

| **Cultures** | |
|---|---|
| **Common name** | **Scientific name** |
| Sugar cane | *Saccharum officinarum* |
| Sorghum | *Sorghum bicolor* |
| Rice | *Oryza sativa* |
| Corn | *Zea mays* |
| Wheat | *Triticum aestivum* |
| Barley | *Hordeum vulgare* |
| Tomato | *Solanum lycopersicum* |
| Soy | *Glycine Max* |
| Cotton | *Gossypium hirsutum* |
| Bean | *Phaseolus vulgaris* |
| Pastures | *Brachiaria spp.* |
| | *Panicum maximum* |
| | *Andropogon gayanus* |
| | *Cynodon dactylon* |
| Coffee | *Coffea arábica* |
| | *Coffea canephora* |

### Beauveria bassiana in Cotesia flavipes

In a preferred embodiment of the present invention, a composition comprising *Beauveria bassianae* and *Cotesia flavipes* is prepared, in which the fungus remains associated with the wasp, and the wasp acts as vector of the fungus for agricultural pests.

### I - Evaluation of Toxicity of Different Isolates of Beauveria bassiana in Cotesia flavipes

To evaluate if it is possible to make a composition using an insect as a vector and disseminator of entomopathogenic fungi, it is necessary to evaluate the compatibility of these agents as well as the pathogenicity of the fungus to insect, because entomopathogenic fungi are those with capacity to cause diseases in certain insects, leading them to death.

The objective of this experiment was to evaluate the toxicity of isolates of *Beauveria bassiana* on the parasitoid *Cotesia flavipes,* thus allowing the selection of less toxic isolates, optimizing the composition.

The experiment was conducted at Biofactory of Biological Control Agents of Bioenergia do Brasil/SA-Lucélia, SP.

### Breeding Cotesia flavipes

The breeding was performed using *D. saccharalis* caterpillars in the third instar. Adult parasitoids with 24 hours old were kept in plastic containers (50 mL) containing a small orifice in the cover of each container enabling adults to leave. Afterwards, the caterpillars were placed close to the orifice, aiming at deposition of parasitoid eggs inside. After parasitism, the caterpillars were transferred to polyethylene boxes containing artificial diet, where they remained until the pupae formation of the parasitoid. The cocoon masses (pupae) were removed and transferred to plastic containers (150 mL), where they remained until adults emerged.

### Production of Beauveria spp. spores

Isolates of *Beauveria spp.,* standard IBCB 215 and those of Bioenergia do Brasil SA BBI01, BBI02, BBI03, BBI04, BBI05, BBI06, BBI07, BBI08, BBI09, BBI010, BBI011, BBI012, BBI013, BBI014, BBI015, BBI016, BBI017 obtained from the mycology collection of Biofactory of Biological Control Agents Laboratory, were used. The isolates were refreshed in third-instar caterpillars of *D. saccharalis.* For the bioassay, the fungi were picked on PDA (potato dextrose agar) and, after seven days, isolates of *Beauveria spp.* were again subcultured in PDA, incubated in a climatic chamber at 26 ± 1°C and photophase of 12 hour, where they remained for ten days. The spores produced on the plate were inoculated into tubes containing autoclaved rice, kept in a climatic chamber at 26 ± 1 °C, relative humidity of ± 40% and photophase of 12 hours during a period of 10 days. Ready, the tubes were transferred to autoclaved rice bags containing 500 g each. After 3 days in the incubation room, after formation of the mycelium, the bags were selected for contamination, only uncontaminated bags were opened and its contents poured into trays which were taken to the "drying room" at a temperature of 21 to 28°C and photophase of at least 16 hours. After 12 to 15 days, i.e., when sporulation of the fungus has been completed, the material was dried to obtain spores.

The evaluation of the viability of the isolate was determined by counting germinated and non-germinated conidia under an optical microscope, 16 hours after plating on PDA, being taken 100 conidia per plate to obtain the percentage of germination.

The experimental design was composed of 22 treatments (including control) with 4 replications of each treatment. For the control, were used containers with *Cotesia flavipes* mass (hatching point) without fungi. The conidia of the isolate IBCB 215 of *Beauveria bassiana* were weighed and stored in plastic tubes and used as standard.

For the assembly of the experiment, the spores were weighed with the aid of an analytical balance so as to obtain an amount of 0.012g (standard predetermined measure) which was stored in a plastic tube. This amount of spores was used to inoculate the containers on average 1,500 *C. flavipes* individuals. After inoculation, the containers were separated into plastic trays and classified into treatments.

**Table 1: Isolates of Beauveria spp. used in the experiment.**

| Tratament | Isolates of *Beauveria spp.* |
|---|---|
| Control | |
| T2 | IBCB 215 |
| T3 | BBI01 |
| T4 | BBI02 |
| T5 | BBI03 |
| T6 | BBI04 |
| T7 | BBI05 |
| T8 | BBI06 |
| T9 | BBI07 |
| T10 | BBI08 |
| T11 | BBI09 |
| T12 | BBI010 |
| T13 | BBI011 |
| T14 | BBI012 |
| T15 | BBI013 |
| T16 | BBI014 |
| T17 | BBI015 |
| T18 | BBI016 |
| T19 | BBI017 |

Each treatment contained 20 containers, four for each of the five evaluation days, totaling 380 containers in the experiment. The containers with the insects were kept in climatic chamber at a temperature of ± 26°C, relative humidity of 70 ± 10% and photophase of 12 hours.

The samples were destructive and mortality was evaluated daily during 5 days after application of the fungi. The individuals remained alive in the containers during the evaluation day were released in open area for 2 hours. Containers with dead individuals were closed and stored for subsequent counting of dead *C. flavipes* individuals per container. The variable measured was the mortality of the parasitoid C. *flavipes* in percentage (%). The counting software of *Cotesia flavipes* was used, considering that in each container 1,500 individuals of the parasitoid were initially placed.

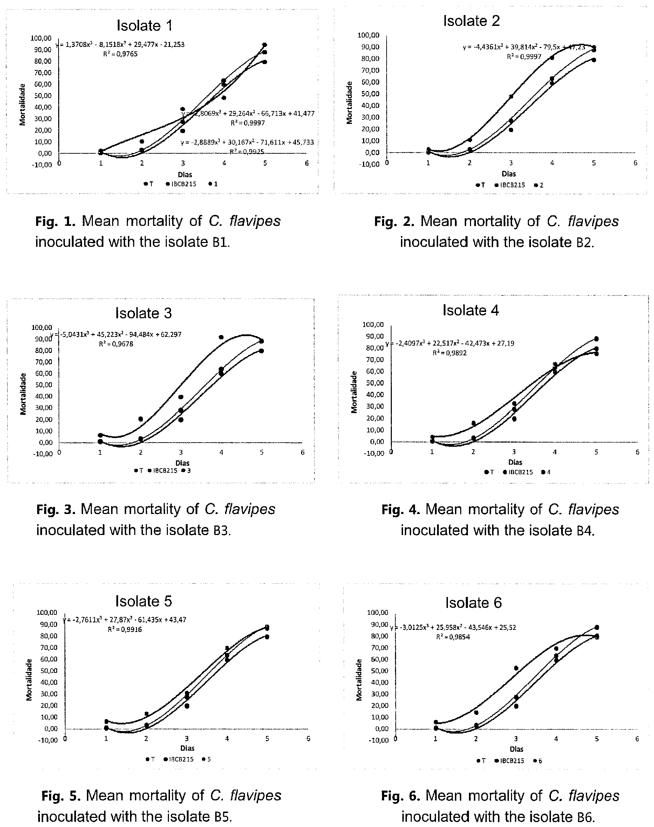

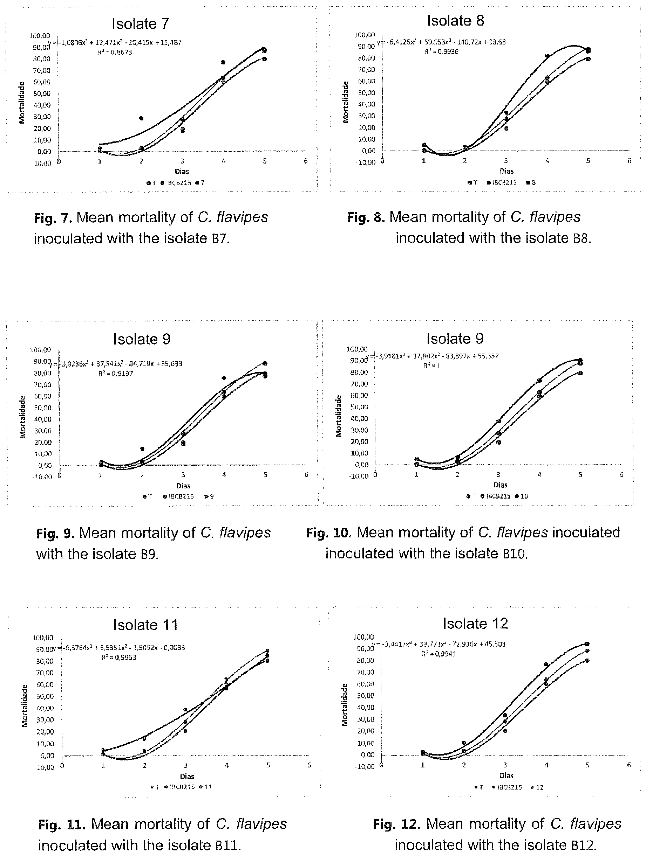

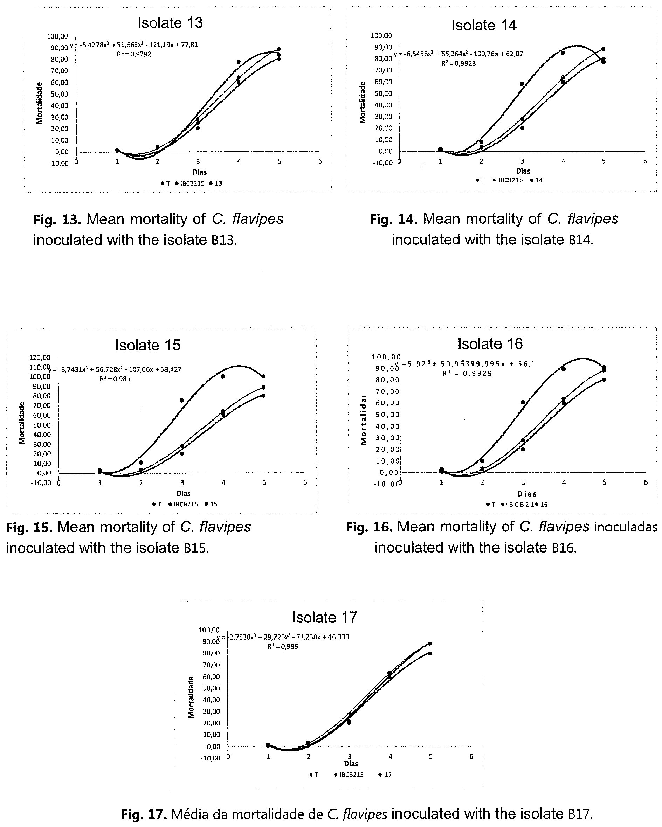

Figures 1 to 17 show graphs of C. *flavipes* mortality rate throughout the five days of evaluation when gray masses were inoculated (hatching point). According to the data obtained, the isolates BBI04, BBI05, BBI09, BBI010, BBI012, BBI013, BBI017 (Figures 4, 5, 9,10, 12, 13 and 17) presented lowest toxicity, which are therefore the most suitable isolates for inoculation of the containers during the manufacturing process of the composition. in treatments BBI01, BBI02, BBI03, BBI06, BBI07, BBI08, BBI011, BBI014, BBI015, BBI016, the mortality rate during the day was high, being these isolates more toxic to the parasitoid and therefore should be avoided in the composition of the product (Figures 2 to 17). If these isolates are used, the inoculation method should provide the least possible contact between fungus and *Cotesia flavipes.*

The results of this experiment will involve the various stages of biomanufacturing the composition, together with the aggressiveness of the isolates for *Diatraea saccharalis* and the adaptation to industrial production system.

### II - Determination of Dosage of Beauveria spp. spores and Moment for Inoculation of parasitoid Cotesia flavipes for the Development of Composition.

For the development of the composition it is essential to determine the spore dosage of the entomopathogenic fungus *Beauveria spp.* for the inoculation of *Cotesia flavipes* individuals. Therefore, the experiments were performed using different dosages and development stages of *Cotesia flavipes*: cocooned pupa (white mass), insect still in the cocoon (gray mass) and newly hatched adult insect (hatched container). With this factorial experiment (stage x dosages of development) it was possible to determine the best dosage for the composition product.

### Breeding Cotesia flavipes

The breeding was performed using standard caterpillar hosts of *Diatraea saccharalis* in the third instar for the breeding of *Cotesia flavipes.* Adult parasitoids with 24 hours old were kept in plastic containers (5 cm x 7 cm) containing a small orifice in the cover of each container enabling adults to leave. Afterwards, the caterpillars were placed close to the orifice, aiming at deposition of parasitoid eggs inside. After parasitism, the caterpillars were transferred to plastic boxes with 19 divisions (30 x 18 x 04 cm) containing artificial diet, where they remained until the pupae formation of the parasitoid. The cocoon masses (pupae) were removed and transferred back to the inoculation cage, where they remained until adults emerged.

### Production of Beauveria spp. spores

To obtain and produce *Beauveria spp.,* standard isolate of *Beauveria spp.* IBCB 215 obtained from the mycology collection of Biofactory of Biological Control Agents Laboratory, were used. The isolate was refreshed in third-instar caterpillars of D. *saccharalis.* For the bioassay, the fungus was harvested on PDA + A (potato dextrose agar + streptomycin sulfate) and after seven days was collected in complete medium (CM) incubated in a climatic chamber at 26 ± 1°C and photophase of 12 hours, where it remained for ten days. The spores produced on the plate were inoculated into tubes containing autoclaved rice and kept in a climatic chamber at 26 ± 1°C, relative humidity of ± 40% and photophase of 12 hours for a period of ten days. Ready, the tubes were transferred to autoclaved rice bags containing 500 g each. After 3 days in the incubation room, after formation of mycelium, the bags were selected for contamination, only uncontaminated bags were opened and its contents poured into trays which were taken to the "drying room" at a temperature of 21 to 28°C and photophase of at least 16 hours. After 12 to 15 days, i.e., when sporulation of the fungus has been completed, the material was dried to obtain spores. The spores were then stored in plastic bags. The evaluation of the viability of the isolate was determined by counting the germinated and non-germinated conidia under an optical microscope, 16 hours after plating on PDA + A, being taken 100 conidia per plate to obtain the percentage of germination.

The experimental design was factorial: 6 dosages x 3 stages of *Cotesia flavipes* x 2 isolates of *Beauveria spp.* for each treatment, 4 replicates were used, the sample unit being represented by a beaker containing 30 C. *flavipes* masses.

For the assembly of the experiment, the spores of the isolates IBCB 215 and BBIO 195 of *Beauveria spp.* were weighed with the aid of an analytical balance in order to obtain a dosage amount of 6 mg, 9 mg, 12 mg, 15 mg and 18 mg per plastic tube. The tubes of each treatment were stored in plastic tubes. The 5 spores dosages of each isolate were used to inoculate the container with C. *flavipes* adults in the foiiowing stages: white mass, gray mass and hatched mass. The control treatment did not receive inoculation of the fungus. After inoculation, the containers were separated into plastic trays and classified into the following treatment, as shown in Table 4.

**Table 1. Treatments used in the present experiment.**

| WHITE MASS | |
|---|---|
| (IBCB 215 and BBIO 195) | |
| TREATMENTS | DOSAGE |
| T1 | Control |
| T2 | 6 mg |
| T3 | 9 mg |
| T4 | 12 mg |
| T5 | 15 mg |
| T6 | 18 mg |

| GRAY MASS | |
|---|---|
| (IBCB 215 and BBIO 195) | |
| TREATMENTS | DOSAGE |
| T1 | Control |
| T2 | 6 mg |
| T3 | 9 mg |
| T4 | 12 mg |
| T5 | 15 mg |
| T6 | 18 mg |

| HATCHED MASS | |
|---|---|
| (IBCB 215 and BBIO 195) | |
| TREATMENTS | DOSAGE |
| T1 | Control |
| T2 | 6 mg |
| T3 | 9 mg |
| T4 | 12 mg |
| T5 | 15 mg |
| T6 | 18 mg |

All treatments contained 60 containers each, totaling 360 containers for the isolate IBCB 215 and the same amount for the isolate BBIO 195. The trays with the containers containing the insects were kept on shelves in climatic chamber at a temperature of ± 26°C, relative humidity of 70 ± 10% and photophase of 12 hours.

After 24 hours of inoculation of the fungus, four containers of hatched mass per treatment were taken to evaluate the mortality, where the live insects were released in open area for 4 hours and the dead were closed and stored for later counting. This procedure was repeated daily until the fifth day.

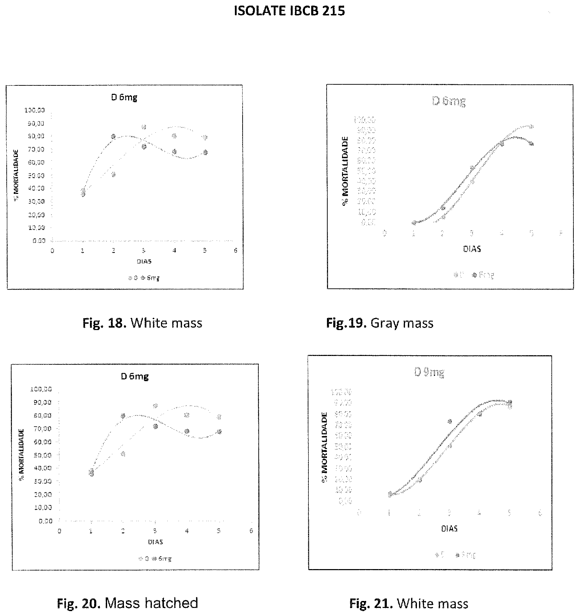

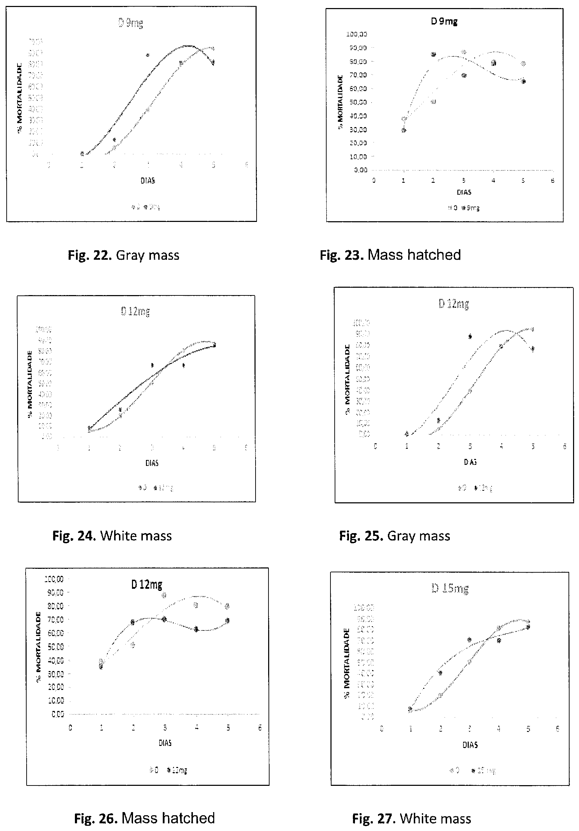

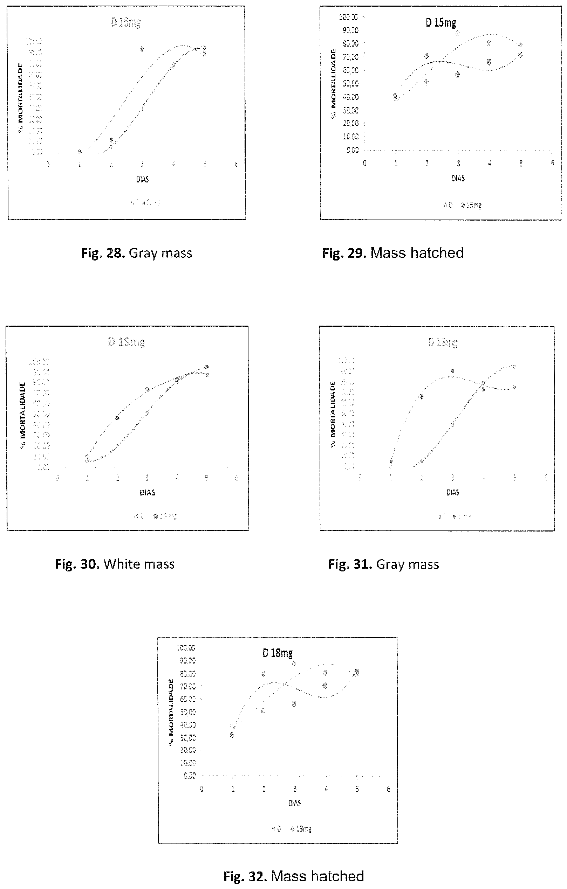

Figures 18 to 32 show graphs of C. *flavipes* mortality rate throughout the five days of evaluation, when they were inoculated with different dosages in white mass, gray mass and hatched mass respectively of isolate IBCB 215. According to the data obtained, the isolate reached a high mortality rate at dosages of 15 and 18 mg in all stages of development of C. *flavipes.* At the dosage of 6 mg, at gray mass stage, the insects reached a mortality rate of 50% between the second and third day, remained equal to the control. Among the doses of 9 and 12 mg, in white mass stage, no significant difference in mortality rate between treated and control groups.

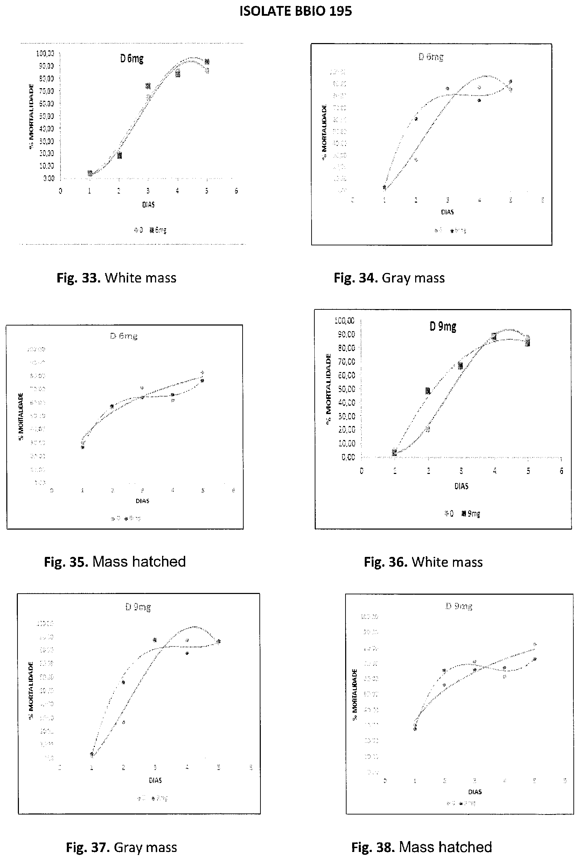

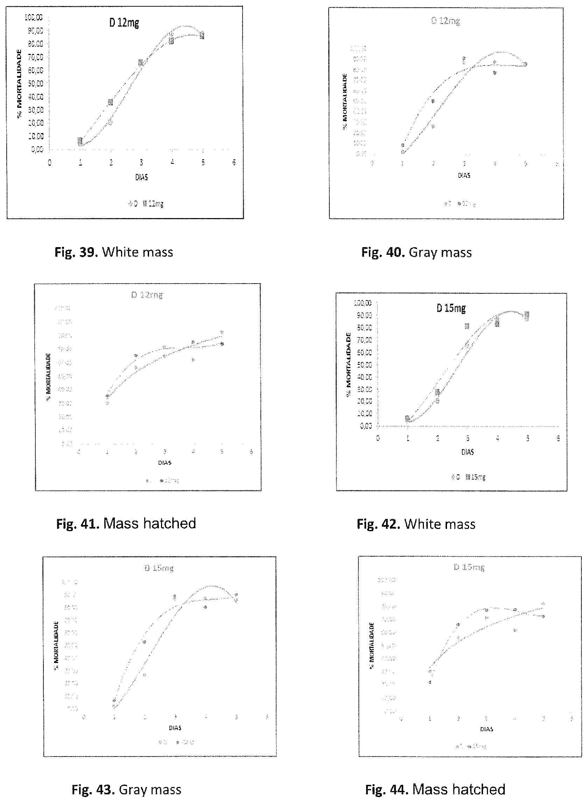

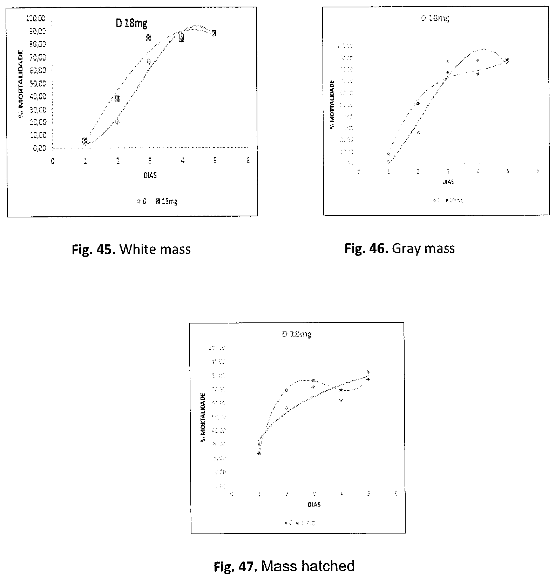

Similarly, according to Figures 33 to 47, isolate BBIO 195 also achieved high mortality rate at doses of 15 and 18 mg in all stages of C. *flavipes* development. At doses of 6, 9 and 12 mg, in the white mass stage, the insects reached more than 60% mortality on the third day after inoculation, remaining equal to the control.

Under the conditions in which the experiment was conducted, it can be concluded that the best dosage for the fungus inoculation in the insect vector is 12 mg of *Beauveria spp.* Spores in the initial stage (white mass) of C. *flavipes* development or during the early hatching due the fact that they did not present significant differences in comparison to the control, being therefore the ideal methodology for the composition of the entomopathogenic fungus with the insect vector for the development of the composition. Therefore, the present study defined the timing and dosage of *Beauveria spp.* in the composition.

The development of the composition should also consider such high toxicity and put at least 10% more individuals into the containers. This can be compensated by choosing a less toxic isolate (another activity of this project selected four less toxic isolate than standard IBCB 215).

### III - Evaluation of the Beauveria bassiana Toxicity at Different Stages of Cotesia flavipes

The fungi used in the composition should present the lowest possible toxicity to *C. flavipes.* For this reason, besides the selection of isolates and determining the optimal dosage, the optimal moment for inoculation, when the toxicity is minimal, should be determined. For this reason, the present experiment was conducted to evaluate the toxicity of *Beauveria spp.* at different stages of *C. flavipes,* determining the best moment of inoculation of the fungus *Beauveria spp.* in containers with *C. flavipes,* aiming a lower toxicity to the parasitoid in the composition.

### Breeding Cotesia flavipes

The breeding was performed using standard caterpillar hosts of *D. saccharalis* in the third instar for breeding *C. flavipes.* Adult parasitoids with 24 hours old were kept in plastic containers (5 cm x 7 cm) containing a small orifice in the cover of each container enabling adults to leave. Afterwards, the caterpillars were placed close to the orifice, aiming at deposition of parasitoid eggs inside. After parasitism, the caterpillars were transferred to plastic boxes with 19 partitions (30 x 18 x 04 cm) containing artificial diet, where they remained until the pupae formation of the parasitoid. The cocoon masses (pupae) were removed and transferred back to the inoculation cage, where they remained until adults emerged.

### Production of Beauveria spp.

Standard isolate IBCB 215 of *Beauveria spp.* was used to obtain and produce *Beauveria spp.* obtained from the mycology collection of Biofactory of Biological Control Agents Laboratory. The isolate was refreshed in third-instar caterpillars of *D. saccharalis.* For the bioassay, the fungus was harvested on PDA + A (potato dextrose agar + streptomycin sulfate) and after seven days was collected in complete medium (CM) incubated in a climatic chamber at 26 ± 1°C and photophase of 12 hours, where it remained for ten days. The spores produced on the plate were inoculated into tubes containing autoclaved rice and kept in a climatic chamber at 26 ± 1°C, relative humidity of ± 40% and photophase of 12 hours for a period of ten days. Ready, the tubes were transferred to autoclaved rice bags containing 500 g each. After 3 days in the incubation room, after formation of mycelium, the bags were selected for contamination, only uncontaminated bags were opened and its contents poured into trays which were taken to the "drying room" at a temperature of 21 to 28°C and photophase of at least 16 hours. After 12 to 15 days, i.e., when sporulation of the fungus has been completed, the material was dried to obtain spores. The spores were then stored in plastic bags. The evaluation of the viability of the isolate was determined by counting the germinated and non-germinated conidia under an optical microscope, 16 hours after plating on PDA + A, being taken 100 conidia per plate to obtain the percentage of germination.

The experimental design was composed of 6 treatments (already including the stages with control) with 4 replicates each. The conidia of isolate IBCB 215 of *Beauveria spp.* were weighed and stored in plastic tubes and used as standard.

For the assembly of the experiment, the spores were weighed with the aid of an analytical balance so as to obtain an amount of 0.012g (standard predetermined measure) which was stored in a plastic tube. This amount of spores was used to inoculate the containers with adults of *C. flavipes.* After inoculation, the containers were separated into plastic trays and classified into treatments: T1 = inoculated newly hatched mass; T2 = inoculated gray mass; T3 = inoculated white mass. The control containers that were not inoculated with fungus constituted the treatments: T4 = newly hatched control mass; T5 = control white mass; T6 = control gray mass. Each treatment contained 20 containers totaling 120 containers per experiment. The containers with insects were maintained in climatic chamber at 26 ± 1°C, relative humidity 70 ± 10% and photophase of 12 hours. Mortality was evaluated daily during 5 days after application of the fungi. The individuals remained alive in the containers during the evaluation days were released in open area for 2 hours. Containers with dead individuals were closed and stored for subsequent counting of dead *C. flavipes* individuals per container. The variable evaluated was the mortality of the parasitoid *C. flavipes* in percentage (%) at different stages of development. The counting software of *Cotesia flavipes* was used, considering that in each container 1,500 individuals of the parasitoid were initially placed.

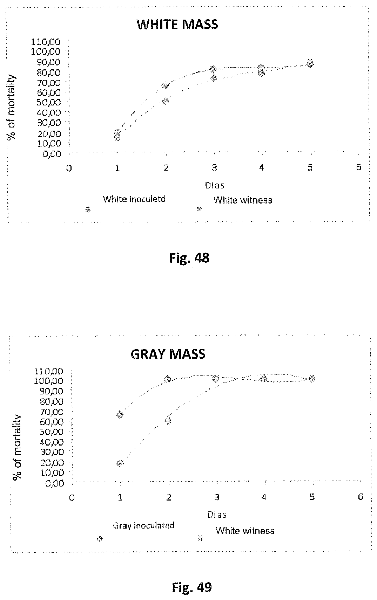

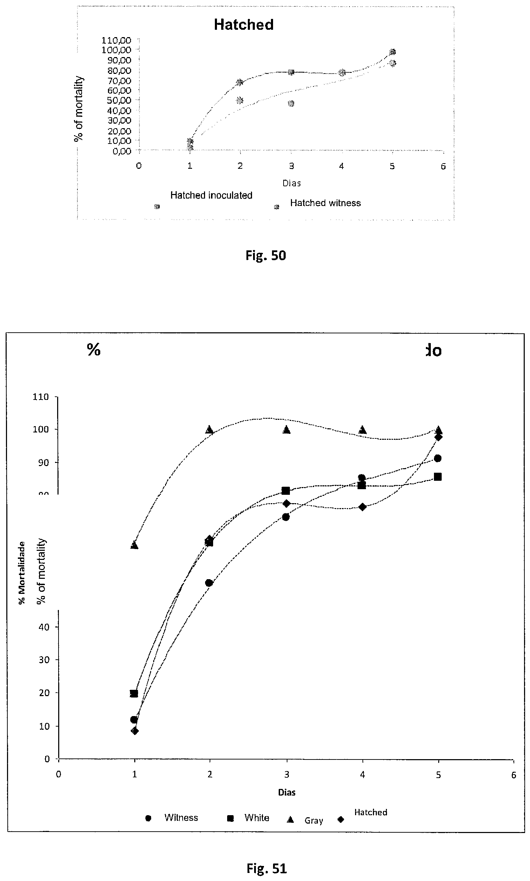

Figures 48 to 50 show graphs of *C. flavipes* mortality rate throughout the five days of evaluation when white masses, gray masses and hatched masses were inoculated, respectively. According to the data obtained, the white mass (Figure 48) and hatched mass (Figure 50) presented lowest toxicity to the fungus of *Beauveria spp.* IBCB 215, which are therefore the most suitable isolate for inoculation of the containers during the manufacturing process of the composition. In the treatment with the gray mass, the mortality rate has reached 100% on the second day with inoculated mass with fungus, which is the most sensitive phase of the parasitoid and therefore should be avoided as a moment of inoculation (Figure 49).

Considering the data presented in Figure 51, it is noted that even in the white masses and in the inoculated hatched masses with the fungus there was a higher mortality than in the masses which did not receive the fungus. Therefore, in addition to promoting the selection of less toxic isolate to *C. flavipes,* the composition needs to consider an inoculation method with the lowest possible contact between fungal spores and parasitoid adults.

Under the conditions in which the experiment was conducted, it can be concluded that the best inoculation moment of *Beauveria spp.* in parasitoid *C. flavipes* was at the hatched mass stage.

### IV - Evaluation of percentage of Cotesia flavipes carrying conidia of Beauveria spp. when used in the composition.

The present experiment, under laboratory conditions, evaluated the percentage of *Cotesia flavipes* individuals that carry *Beauveria spp.* spores in their body, colonies formed in Petri dishes with PDA culture medium were observed. Comparing the data obtained in the plot using *Cotesia flavipes* + *Beauveria spp.* with control data, which is the use only *Cotesia flavipes.*

### Obtaining and producing Beauveria spp.:

To obtain and produce *Beauveria spp.,* isolate of *Beauveria spp.* IBCB 215 obtained from the mycology collection of Biofactory of Biological Control Agents Laboratory, were used. The isolate was selected because of its use in sugarcane for controlling pest *Diatraea saccharalis*, and based on preliminary tests. The isolate was refreshed in third instar caterpillars of *D. saccharalis.* For the bioassay, fungus was harvested in a yeast-based culture medium, incubated in a climatic chamber BOD at 26 ± 1 ° C and photophase of 12 hour, where they remained for 21 days. The plate powder was applied in tubes containing tubes and kept in a climatic chamber at 26 ± 1°C for a period of 10 days. Ready, the tubes were transferred to autoclaved rice bags containing 500 g each. After 3 days in the incubation room, after formation of the mycelium, the bags were selected for contamination, only uncontaminated bags were opened and its contents poured into trays which were taken to the "drying room" at a temperature of 21 to 28°C and photophase of at least 16 hours. After 12 to 15 days, i.e., when sporulation of the fungus has been completed, the material was dried to obtain spores. After drying and sporulation the rice was separated from fungus powder in a brushing process and the powder stored in plastic bags. The evaluation of the viability of the isolate was determined by counting germinated and non-germinated conidia under an optical microscope, 16 hours after plating on PDA + A, being taken 100 conidia per plate to obtain the percentage of germination.

### Obtaining Cotesia flavipes:

*Diatraea saccharalis* caterpillars were used as standard host in the third instar for the creation of *Cotesia flavipes.* Adult parasitoids with 24 hours old were kept in plastic containers (5 cm x 7 cm) containing a small orifice in the cover of each container enabling adults to leave. Afterwards, the caterpillars were placed close to the orifice, aiming at deposition of parasitoid eggs inside. After parasitism, the caterpillars were transferred to plastic boxes (2 x 6 cm) containing artificial diet, where they remained until the pupae formation of the parasitoid. The cocoon masses (pupae) were removed and transferred back to the inoculation cage, where they remained until adults emerged

### Obtaining Diatraea saccharalis

Caterpillars of the species *Diatraea saccharalis* were obtained through artificial breeding performed at Biofactory of Biological Control Agents of Bioenergia do Brasil/SA-Lucélia, SP.

### Preparation of Petri dishes with culture medium

The culture medium PDA (potato + dextrose + agar) was used for the job, where 39 grams thereof per liter of water, autoclaved at 120°C for 30 minutes and then immediately adding approximately 15 mL of culture medium in each Petri dish of 9 cm x 1.5 cm, until a total of 200 plates of culture medium, were added.

### Preparation of Cotesia flavipes

A total of 100 containers (5 x 7 cm plastic containers) containing 30 masses in each container, approximately 1,500 individuals / container, hatched and mated.

Fifty doses of *Beauveria spp.* containing 0.012 grams of pure spores were weighted and added a dose in each container of *Cotesia flavipes* to create a portion with 50 containers of *Cotesia flavipes* with *Beauveria spp.* spores (composition) and a control of 50 containers with only *Cotesia flavipes.*

### Transfer of Cotesia flavipes to Petri dishes

After 24 hours, the Beauveria spp. spores were added in the *Cotesia flavipes* containers, an orifice was made in the cover of the containers with the aid of a wooden stem, through which 10 individuals of *Cotesia flavipes* were collected from each container with the aid of a metal clip, flambé it to each individual collected.

The individuals collected were inserted into Petri dishes with PDA culture medium with five individuals in each Petri dish, thus having 2 dishes for each container of *Cotesia flavipes.*

After individuals of *Cotesia flavipes* were added to the plates, they were incubated in a climatic chamber at 26 ± 1°C and for 4 days after which the *Beauveria spp,* colonies were counted in the Petri dishes.

After counting, a chart was drawn in the "Microsoft Excel" program comparing the quantities of colonies formed in the portion (composition) and in control.

### Results

As can be seen in Appendix 1, there was growth of Beauveria spp colonies in the Petri dishes related to the composition having no colonies on control dishes which were free from spores.

Appendix 1 shows a photograph A) Petri dish with PDA culture medium and *Beauveria spp.* colonies (composition); B) Petri dish with PDA culture medium and individuals *Cotesia flavipes* without colony growth (control).

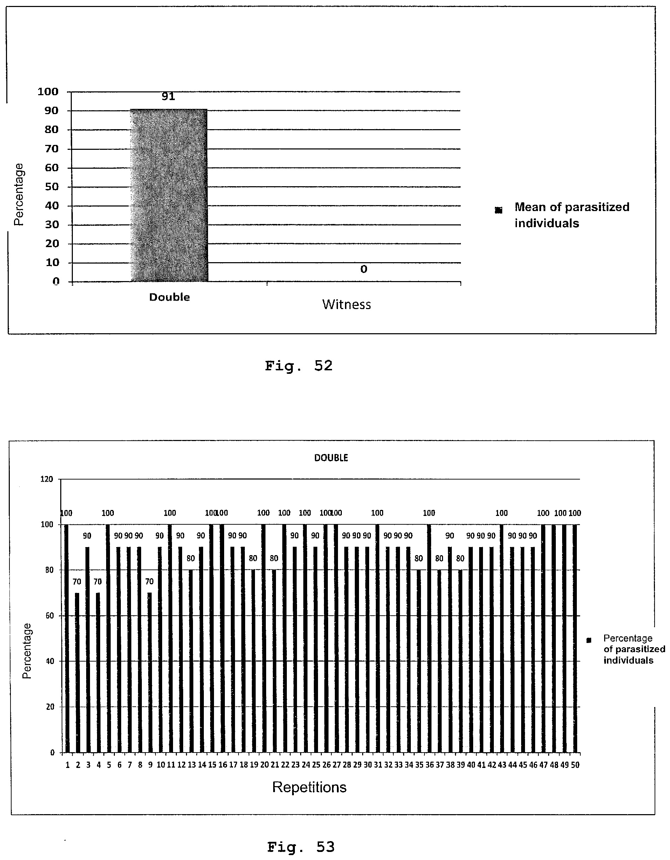

The variation of the percentage of colonies formed on Petri dishes of the composition can be observed in Figure 52, which has a minimum percentage of 70% and a maximum percentage of 100%. Figure 53 show the average number of composition formed in the composition and the control, demonstrating that approximately 91% of individuals of *Cotesia flavipes* may be parasitizing *D. saccharalis.*

The experiment demonstrated that a large percentage of individuals of *Cotesia flavipes* carry the Beauveria spp. spores of the composition in their body, thus giving a great advantage when compared to *Cotesia flavipes* alone, where a container with 1,500 individuals of *Cotesia flavipes* has approximately 750 individuals (females) able to carry out the parasitism of the pest, while in the composition with the same 1,500 individuals, approximately 1,365 have the potential to carry out the parasitism, and a further double parasitism, with the collaboration of wasp and fungi simultaneously.

### V - Parasitism of the Composition "Cotesia flavipes + Beauveria spp." to Diatraea saccharalis in Cage Conditions

The composition must have high parasitism capacity of the target pest and should not affect the behavior and performance nor the parasitoid *Cotesia flavipes* behavior. For this reason, the present experiment was conducted to evaluate the behavior and parasitism of the composition with *Cotesia flavipes* + *Beauveria spp.,* in comparison to the Control (*Cotesia flavipes* alone).

The present experiment evaluated the parasitism of the composition in *Diatraea saccharalis* caterpillars under cage conditions, evaluating the composition with *Cotesia flavipes* + *Beauveria spp.*

The experiment was carried out at Biofactory of Biological Control Agents of Bioenergia do Brasil SA, in the municipality of Lucélia - SP. The experimental design with *Beauveria spp*. was completely randomized with 2 treatments: T1 = *C. flavipes* + *Beauveria spp.*; and T2 = Control = *C. flavipes* without *Beauveria spp.* Each replicate was represented by a sample unit of 90 boxes with 5 replicates.

To obtain and produce *Beauveria spp.,* standard isolate of *Beauveria spp.* IBCB 215 obtained from the mycology collection of Biofactory of Biological Control Agents Laboratory, were used. The isolate was refreshed in third-instar caterpillars of *D. saccharalis.* For the bioassay, the fungus was harvested on PDA + A (potato dextrose agar + streptomycin) and after seven days was collected in complete medium (CM) incubated in a climatic chamber at 26 ± 1°C and photophase of 12 hours, where it remained for ten days. The spores were inoculated into tubes containing autoclaved rice and kept in a climatic chamber at 26 ± 1°C, relative humidity of ± 40% and photophase of 12 hours for a period of ten days. Ready, the tubes were transferred to autoclaved rice bags containing 500 g each. After 3 days in the incubation room, after formation of mycelium, the bags were selected for contamination, only uncontaminated bags were opened and its contents poured into trays that were taken to the "drying room" at a temperature of 21 to 28°C and photophase of at least 16 hours. After 12 to 15 days, i.e., when sporulation of the fungus has been completed, the material was dried to,obtain spores. The spores were then stored in plastic bags. The evaluation of the viability of the isolate was determined by counting the germinated and non-germinated conidia under an optical microscope, 16 hours after plating on PDA + A, being taken 100 conidia per plate to obtain the percentage of germination.

### Obtaining Cotesia flavipes

*Diatraea saccharalis* caterpillars were used as standard host in the third instar for the creation of *Cotesia flavipes.* Adult parasitoids with 24 hours old were kept in plastic containers (5 cm x 7 cm) containing a small orifice in the cover of each container enabling adults to leave. Afterwards, the caterpillars were placed close to the orifice, aiming at deposition of parasitoid eggs inside. After parasitism, the caterpillars were transferred to plastic boxes (2 x 6 cm) containing artificial diet, where they remained until the formation of the pupae of the parasitoid. The cocoon masses (pupae) were removed and transferred back into the plastic container, where they remained until adult emergence.

### Obtaining Diatraea saccharalis

Caterpillars of the species *Diatraea saccharalis* were obtained through artificial breeding performed at Biofactory of Biological Control Agents of Bioenergia do Brasil/SA-Lucélia, SP.

### Cage Construction

The structures were assembled with a dimension of 2.5 m x 2.5 m with iron frames. After assembly the skeleton of the cages, TNC white fabric was used as coating to prevent C. *flavipes* from escaping. Next, a door was sealed with Velcro for entrance and collection of the insects. Openings in the TNT were also made in the form of plastic-sealed rectangles in each cage, so as to have visibility from outside to inside the cage, preventing interference in the development of the experiment.

### Experiment Preparation

Prior to each of the five replicates of the experiment, with the aid of a spray bottle, each cage was sterilized with 70% alcohol, and then 5 opened BDA Petri dishes were placed in each cage and left for 30 minutes to ensure there was no *Beauveria spp.* fungus in the internal environment. After this period to detect the presence of the fungus, the plates were sealed and incubated in a climatic chamber at 26 ± 1°C for 10 days. After testing that there was no contamination of the environment with the fungus, the cages were again sterilized and the experiment was started.

One hundred and eighty third instar caterpillars, 14 days old, were separated and distributed in trays previously sterilized with 70% alcohol. Fifteen caterpillars were placed in each tray, totaling 12 trays, six for each treatment: the Control cage (*Cotesia flavipes*) and the composition cage (Composition *Cotesia flavipes* + *Beauveria spp.*), totaling 90 caterpillars per treatment. Then, sugarcane stalks were cut in half to serve as an attraction so that the caterpillars did not leave the trays.

Four polypropylene boxes (5 cm x 7 cm) containing 2 masses were used in each one, corresponding to approximately 70 individuals hatched and mated per box. Two plastic boxes with the *Cotesia flavipes* already hatch were inoculated with 12 mg of *Beauveria spp.* spores. (Composition) and the other two boxes were kept without fungus as Control (*Cotesia flavipes*). Two boxes containing the composition *C. flavipes + Beauveria spp.* (composition) were placed and opened in one cage, and in the other, only 2 boxes containing *C. flavipes* (Control) for a period of five hours for action of *C. flavipes* and composition. Thus, considering a proportion of 60% of females, a female of C. *flavipes* was placed for each *D. saccharalis* caterpillar. During this period, 180 polyethylene boxes with a diameter of 3.5 cm were sterilized and 1.5 cm sugar cane cubes were cut to serve as food for the caterpillars. Both the boxes and the sugarcane cubes were sterilized with 70% alcohol, 90 boxes of the composition and 90 Control boxes (wasp alone) were identified. After five hours the caterpillars were removed from the cage, first the Control and then the composition, with the aid of a forceps. To avoid contamination and cannibalism, after each collection of each caterpillar, the forceps were sterilized and the caterpillars were individualized in the boxes. The sugarcane cubes for feeding were placed in the boxes and these were evaluated daily for 30 days. This procedure was repeated once a week for 5 weeks, constituting five randomized block replicates.

After 10 days the Petri dishes containing BDA medium that were opened in the cages were analyzed, and no occurrence of the fungus *Beauveria spp.* was observed in any of the Petri dishes, proving that it did not contaminate the internal environment of the cage.

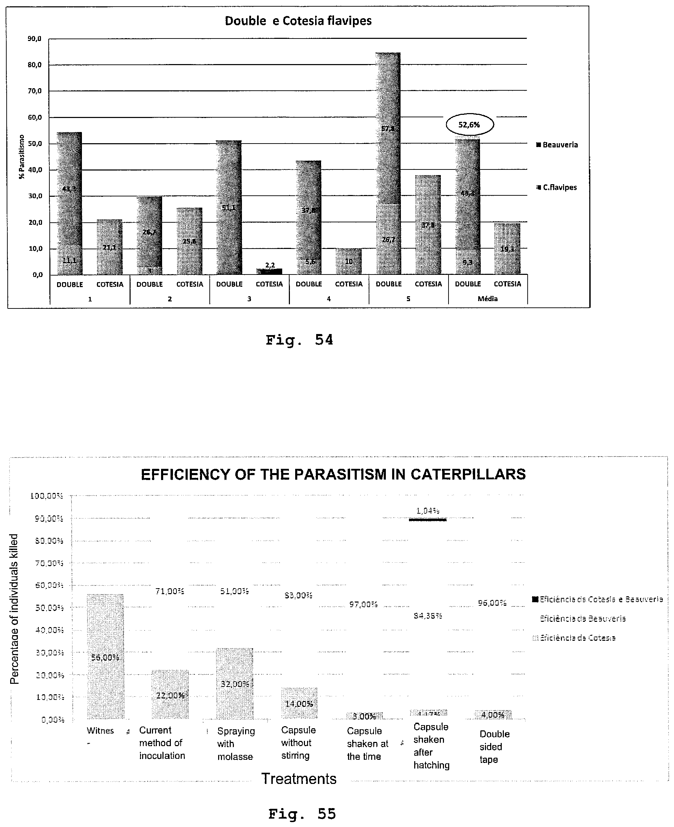

As can be seen in Figure 54, the composition with *C. flavipes* + *Beauveria spp.,* provided a significant increase in parasitism of *D. saccharaiis*, with a mean of 52.6% versus only 19.3% of the Control with *C. Flavipes* alone, that is, it was 2.7 times more efficient.

Analyzing the repetitions, the composition was more effective in all of them, highlighting in some of them with more than 20% in the parasitism in comparison to the Control, some of them having a complete fungus appearance in 5 days, while in the Control the masses began to appear with 10 days. Therefore, in addition to increasing parasitism, the composition provided a faster killing of the pest. Four days later, the caterpillars parasitized by the fungus were already immobile and without food.

The composition in all the replicates showed a greater efficiency in the control, concluding that C. flavipes transports the entomopathogenic fungus *Beauveria spp.* to the caterpillar *Diatraea saccharalis,* being a new alternative for the more efficient control of borer. In addition, death is faster, and fungal spores can infect other individuals in the same generation of the pest. One of the factors that may explain the greater efficiency of the composition is the fact that the male *C. flavipes* also act with disseminator and vector of the fungus and the female lands in more than one caterpillar leading the fungus to more individuals.

### VI - Inoculation of Different Methods of Inoculation in Cotesia flavipes with Beauveria bassiana

This experiment aimed to evaluate the different methodologies of inoculation of the fungus *Beauveria bassiana* in *Cotesia flavipes* to conclude the best method for scale production of the composition object of the present invention.

*Diatraea saccharalis* caterpillars were used as standard host in the third instar for the creation of *Cotesia flavipes.* Adult parasitoids with 24 hours old were kept in plastic containers (5 cm x 7 cm) containing a small orifice in the cover of each container enabling adults to leave. Afterwards, the caterpillars were placed close to the orifice, aiming at deposition of parasitoid eggs inside. After parasitism, the caterpillars were transferred to plastic boxes with 19 divisions (30 cm x 18 cm x 04 cm), containing artificial diet, where they remained for 14 days for the formation of pupae of the parasitoid. The cocoon masses (pupae) were removed and transferred back to the inoculation cage, where they remained for six days until the adults completely emerged.

To obtain and produce *Beauveria spp.,* standard isolate of *Beauveria spp.* IBCB 66 obtained from Biological Control Laboratory of the Biological Institute of Campinas, was used. The isolate was refreshed in third-instar caterpillars of *D. saccharalis.* For the bioassay, the fungus was harvested in a yeast-based culture medium, incubated in a climatic chamber at 26 ± 1°C and photophase of 12 hours, where it remained for 21 days. The powder produced on the plate was applied into tubes containing rice and kept in a climatic chamber at 26 ± 1°C for a period of ten days. Ready, the tubes were transferred to autoclaved rice bags containing 500 g each. After 3 days in the incubation room, after formation of mycelium, the bags were selected for contamination, only uncontaminated bags were opened and its contents poured into trays which were taken to the "drying room" at a temperature of 21 to 28°C and photophase of at least 16 hours. After 12 to 15 days, i.e., when sporulation of the fungus has been completed, the material was dried to obtain spores. After this period of sporulation and drying, the rice was separated from the fungus powder in a brushing process and the powder was stored in plastic bags. The evaluation of the viability of the isolate was determined by counting the germinated and non-germinated conidia under an optical microscope, 16 hours after plating on PDA + A, being taken 100 conidia per plate to obtain the percentage of germination.

The experiment was conducted at Biofactory of Biological Control Agents of Bioenergia do Brasil/SA-Lucélia, SP. The experimental design was completely randomized, containing seven treatments with five replications each. The portion was represented by a container containing 30 gray masses of *C. flavipes.*

For the assembly of the experiment, the isolate IBCB 66 of *Beauveria bassiana* was weighed with the aid of an analytical balance in a concentration of 50 mg per plastic tube. The container with *C. flavipes* adults were exposed to the fungus in different methods, separated and classified in plastic trays in treatments: T1 - containers without the fungus (Control); T2 - dusting of containers with 50 mg of spores with the aid of a pipe; T3 - containers sprayed with a solution of 25 mL of autoclaved water + 7.5 mL of molasses + 50 mg of pure spores; T4 - containers inoculated with a pierced capsule at both ends containing 50 mg of pure spores and the containers were not stirred; T5 - containers inoculated with a pierced capsule at both ends containing 50 mg of pure spores were stirred after inoculated; T6 - containers inoculated with a pierced capsule at both ends containing 50 mg of pure spores, the containers were stirred at the day after hatching individuals and T7 - a double sided tape containing 50 mg of pure *B. bassiana* spores to the inside cover of the container, the containers being then capped. All treatments contained 5 containers each, totaling 35 containers. The trays with containers of *Cotesia flavipes* were kept in a climatic chamber at ± 26°C, relative humidity 70 ± 10% and photophase of 12 hours.

After 24 hours of fungus inoculation, 20 caterpillars were inoculated per container of each treatment and parasitism was evaluated daily.

It is waited 72 hours after fungal inoculation and 35 containers were evaluated. For this purpose, 72 hours after inoculation of the fungus, live individuals were transferred to empty containers for further evaluation of dead, living individuals and non-hatched cocoons.

After inoculating the caterpillars, 10 remaining individuals from each container were placed on Petri dishes with BDA medium for colony growth evaluation, and 20 individuals from each container were separated from plastic tubes, 10 males and 10 females in each tube. For counting in Neubauer's chamber of conidia per individual.

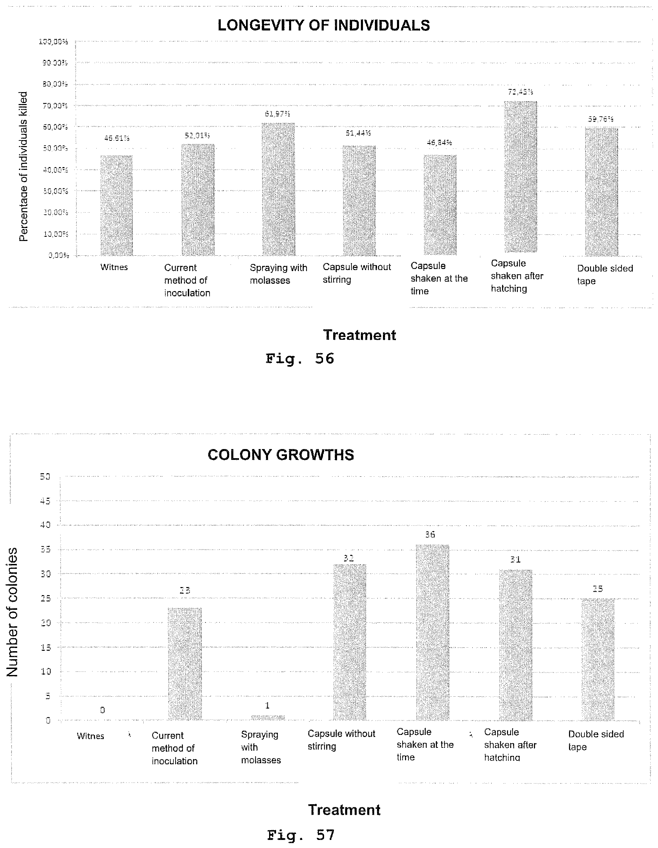

Figures 55 to 58 show graphs with results of the experiments on the efficiency of parasitism on caterpillars, longevity of individuals, growth of colonies and counts of conidia per individual of *C. flavipes* respectively. According to the data obtained on the efficiency of parasitism (Figure 55), the maid fresh and double-sided capsule methods reached a percentage of total parasitism equal to 100%, and the maid fresh stirred capsule showed 97.00% parasitism by *Beauveria bassiana.* The data obtained for longevity of *C. flavipes* (Figure 56) provided mortality of 46.84% of individuals in the maid fresh capsule method, indicating lower mortality compared even with the current method of inoculation, which was 52.01%.

The colony growth (Figure 57) did not show a considerable variation between the treatments of non-stirred capsules (32 colonies), maid fresh stirred capsule (36 colonies) and capsule stirred after hatching (31 colonies).

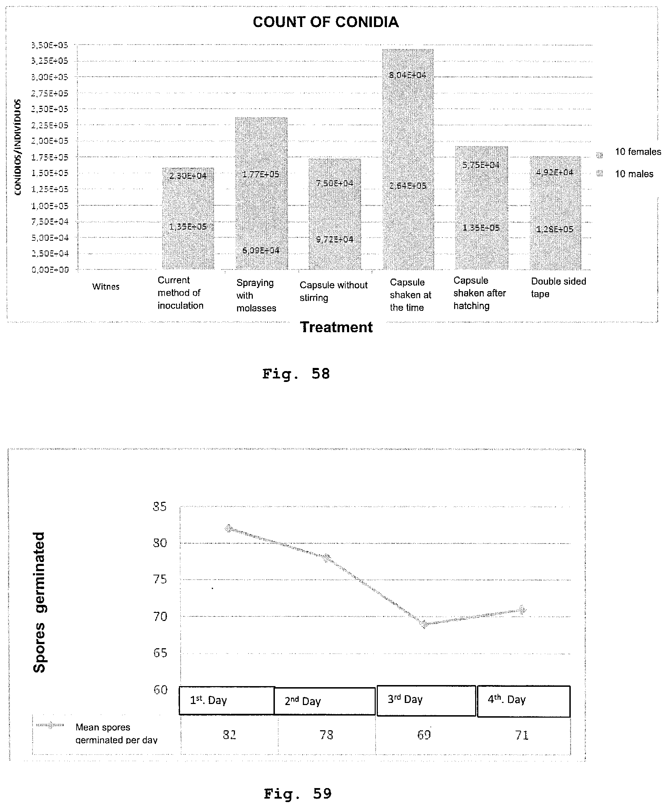

The data observed in the conidia counting chart per individual (Figure 58) shows that *Cotesia* males carry more spores than females in most treatments, showing that males and females are effective for the dissemination and vectorization of entomopathogenic fungi.

In the conditions under which the experiment was conducted, it can be concluded that the best method for the inoculation of *Beauveria bassiana* in the parasitoid *Cotesia flavipes* was the maid fresh stirred capsule, due to the fact that it presented more satisfactory results in all evaluations: parasitism efficiency in caterpillars, longevity of individuals, colony growth and counting of conidia per individual, thus being ideal for the manufacturing process of the composition object of the present.

### VII - viability of Spore Composition

The objective of this experiment was to evaluate the viability of *Beauveria bassiana* spores found in the composition through germination.

### Procedure 1:

With the aid of a beaker put water to a liter, then transfer to an Erlenmeyer and add 14g of Agar-Agar, cover with cotton and put inside the autoclave by turning on and leaving for 30 minutes at 120°C until the cycle completes. After completion of the cycle, switch off and wait for the medium to cool down to 37°C. After reaching the temperature of 37°C the medium was poured into Petri dishes in a stream bed with a lamp, totaling 100 Petri dishes with agar-agar medium. The plates were sealed with plastic film.

### Procedure 2:

Twenty five containers of Cotesia flavipes recently hatched from laboratory of biofactory were collected and *Beauveria bassiana* spores were placed to produce the composition.

### Procedure 3:

On the first day after the spores were placed in the containers, 10 *Cotesia flavipes* individuals were collected and placed in eppendorf with 1 mL of water each container an eppendorf, stirred on the tube shaker for 2 minutes then with the aid of a 100 pl Pipette into a Petri dish. Perform this procedure until the fourth day.

As can be observed in the graph of Figure 59, the peak of greater efficiency of the composition is in the first day, on the other days there is a satisfactory drop in viability of the product, since we know that even if the composition is stored there will be no significant losses, since its downward viability is only 11% by day four, a satisfactory result because it is a living organism.

### VIII - Different amounts of Cotesia flavipes for the accomplishment of the Composition of Parasitoids and Entomopathogenic Fungi

The objective of this experiment was to demonstrate that the composition of parasitoids and entomopathogenic fungi can be developed in a wide range of quantities of individuals and in devices of different volumes.

In order to obtain *Cotesia flavipes, Diatraea saccharalis* caterpillars were used as standard host in the third instar. Adult parasitoids with 24 hours old were kept in plastic containers (50 mL) containing a small orifice in the cover of each container enabling adults to leave. Afterwards, the caterpillars were placed close to the orifice, aiming at deposition of parasitoid eggs inside. After parasitism, the caterpillars were transferred to polyethylene boxes containing artificial diet, where they remained until the formation of the pupae of the parasitoid. The cocoon masses (pupae) were removed and transferred to the device used in the experiment, where they remained until adult emergence. The volumes of the containers used were 0.15, 0.5, 5, 15, 25 and 38 L, having, respectively, 1,500, 5,000, 50,000, 150,000, 250,000 and 380,000 *Cotesia flavipes* individuals in each device.

To obtain and produce *Beauveria spp.,* standard isolate of *Beauveria spp.* IBCB 66 obtained from Biological Control Laboratory of the Biological Institute of Campinas, were used. The isolate was refreshed in third-instar caterpillars of *D. saccharalis.* For the bioassay, the fungus was harvested on PDA + A (potato dextrose agar + streptomycin sulphate) and after seven days was collected in complete medium (CM) incubated in a climatic chamber at 26 ± 1°C and photophase of 12 hours, where it remained for ten days. The spores produced were inoculated into tubes containing autoclaved rice and kept in a climatic chamber at 26 ± 1°C, relative humidity of ± 40% and photophase of 12 hours for a period of ten days. Ready, the tubes were transferred to autoclaved rice bags containing 500 g each. After 3 days in the incubation room, after formation of mycelium, the bags were selected for contamination, only uncontaminated bags were opened and its contents poured into trays that were taken to the "drying room" at a temperature of 21 to 28°C and photophase of at least 16 hours. After 12 to 15 days, i.e., when sporulation of the fungus has been completed, the material was dried to obtain spores by brushing. The spores were then stored in plastic bags. The evaluation of the viability of the isolate was determined by counting the germinated and non-germinated conidia under an optical microscope, 16 hours after plating on PDA + A, being taken 100 conidia per plate to obtain the percentage of germination.

The experiment was conducted at Biofactory of Biological Control Agents of Bioenergia do Brasil/SA-Lucélia, SP. The experimental design was composed of six treatments (already including the stages with control) with four replicates each. The conidia of isolate IBCB 66 of *Beauveria bassiana* were weighed and stored into plastic tubes.

For the assembly of the experiment, the spores were weighed with the aid of an analytical balance in order to obtain the following amounts: 0.012g (0.15 L container), 0.04 g (0.5 L container), 0,4 g (5 L container), 12 g (15 L container), 2 g (25 L container) and 3,04 g (38 L container) which were stored in a plastic tube. This amount of spores was used to inoculate the containers with *C. flavipes* adults.

After inoculation, the containers were separated and sorted into treatment: T1 = 1,500 individuals; T2 = 5,000 individuals; T3 = 50,000 individuals; T4 = 150,000 individuals; T5 = 250,000 individuals; T6 = 380,000 individuals. The containers with the insects were kept in a climatic chamber at ± 26°C, relative humidity of 70 ± 10% and photophase of 12 hours.

For the experiment, the following parameters were evaluated: longevity of *Cotesia individuals flavipes,* number of *Cotesia flavipes* individuals capable of forming colonies of *Beauveria bassiana,* amount of conidia of *Beauveria bassiana* in each *Cotesia flavipes* individual and efficiency of parasitism caused by the composition of *Cotesia flavipes* + *Beauveria bassiana.*

After 24 hours of fungus inoculation, 20 caterpillars per replicate of each treatment were inoculated and the parasitism was evaluated daily.

After inoculating the caterpillars, 10 individuals were randomly selected from those remaining in each device and transferred to Petri dishes with PDA medium to evaluate the growth of colonies. Twenty individuals of each device were also transferred to plastic tubes, 10 males and 10 females in each tube, totalizing two tubes, for counting in Neubauer chamber of conidia per individual.

After 72 hours of inoculation, the containers were evaluated, in which the living individuals were transferred to empty container for further evaluation of dead, live individuals and non-hatched cocoons.

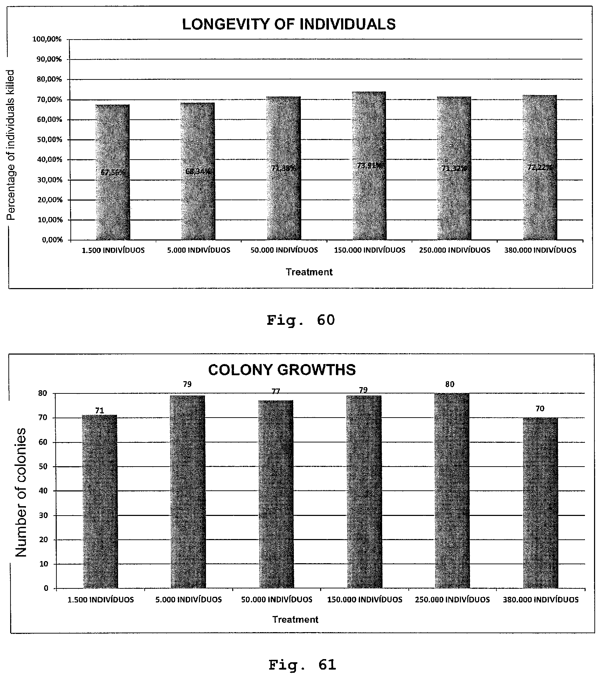

Figures 60 to 63 show results of evaluations of parasitism efficiency in caterpillars, longevity of individuals, colony growth and count of conidia per individual of *C. flavipes,* respectively. According to the data obtained on the efficiency of parasitism (Figure 60), the different amounts of individuals and different containers presented a high efficiency in all treatments. The data obtained from the longevity (Figure 61) did not present a significant difference in the mortality of the individuals, thus not reducing the useful life of the composition.

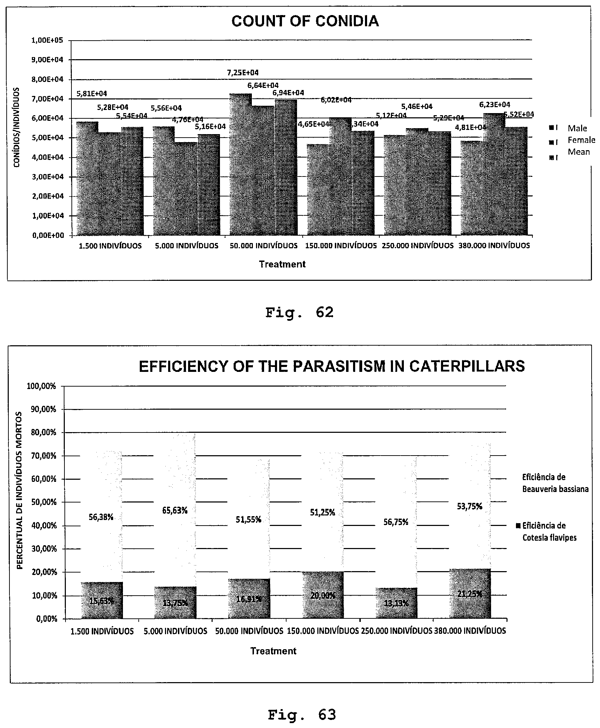

Colony growth (Figure 62) shows that *Cotesia flavipes* individuals continue to carry conidia capable of forming *Beauveria bassiana* colonies in compositions with large number of individuals.

The data observed in the conidia count graph per individual demonstrate that males also carry considerable amounts of spores, so males and females are effective for composition.

### Metarhizium anisopliae in Cotesia flavipes

In another preferred embodiment of the present invention, a composition comprising the fungus *Metarhizium anisopliae* and the wasp *Cotesia flavipes,* in which the fungus remains associated with wasp, is prepared and the wasp acts as vector of the fungus for agricultural pests.

### IX - Analysis of Parasitism and Toxicity of different isolates of Metarhizium anisopliae on Cotesia flavipes.

The objective of this experiment was to evaluate the effect of the isolates of *Metarhizium anisopliae* on the parasitoid *Cotesia flavipes,* thus obtaining a less toxic isolate in association with *Cotesia,* thus making the composition possible.

The experiment was carried out in Biofactory of Biological Control Agents of Bioenergia do Brasil/SA-Lucélia, SP, during the period of March 2013.

### Breeding Cotesia flavipes

The breeding was performed using *Diatraea saccharalis* caterpillars were used as standard host in the third instar. Adult parasitoids with 24 hours old were kept in plastic containers (50 mL) containing a small orifice in the cover of each container enabling adults to leave. Afterwards, the caterpillars were placed close to the orifice, aiming at deposition of parasitoid eggs inside. After parasitism, the caterpillars were transferred to polyethylene boxes containing artificial diet, where they remained until the formation of the pupae of the parasitoid. The cocoon masses (pupae) were removed and transferred to the device used in the experiment, where they remained until adult emergence.

### Obtaining Metarhizium anisopliae

To obtain *Metarhizium anisopliae,* standard isolate of M. *anisopliae* IBCB 425, MBIO1, MBIO2, MBIO3, MBIO4, MBIO5, MBIO6, MBIO7, MBIO8, MBIO9, MBIO10, MBIO11, MBIO12, MBIO13, MBIO14, MBIO15, MBIO16, MBIO17, MBIO18, MBIO19, MBIO20 obtained from the mycology collection of Biofactory of Biological Control Agents Laboratory, were used. The isolate was refreshed in third-instar caterpillars of *D. saccharalis.* For the bioassay, the fungus was harvested on PDA (potato dextrose agar) and after seven days the isolates of *M. anisopliae* were re-collected in BDA, incubated in a climatic chamber at 26 ± 1°C and photophase of 12 hours, where it remained for ten days. The spores produced were inoculated into tubes containing autoclaved rice and kept in a climatic chamber at 26 ± 1°C, relative humidity of ± 40% and photophase of 12 hours for a period of ten days. Ready, the tubes were transferred to autoclaved rice bags containing 500 g each. After 3 days in the incubation room, after formation of mycelium, the bags were selected for contamination, only uncontaminated bags were opened and its contents poured into trays that were taken to the "drying room" at a temperature of 21 to 28°C and photophase of at least 16 hours. After 12 to 15 days, i.e., when sporulation of the fungus has been completed, the material was dried to obtain spores. The spores were then stored in plastic bags. The evaluation of the viability of the isolate was determined by counting the germinated and non-germinated conidia under an optical microscope, 16 hours after plating on PDA + A, being taken 100 conidia per plate to obtain the percentage of germination

The experimental design was composed of 22 treatments (including control) with 04 replications each treatment. For the control, were used containers with mass of *Cotesia flavipes* (hatching point) without fungus. The conidia of isolate IBCB 425 of *Metarhizium anisopliae* were weighed and stored into plastic tubes and used as standard.

For the assembly of the experiment, the spores were weighed with the aid of an analytical balance so as to obtain an amount of 0,012g (predetermined standard measure) that was stored in a plastic tube. This amount of spores was used to inoculate the containers on average 1,500 *C*. *flavipes* individuals. After inoculation, the containers were separated into plastic trays and classified into treatments:

**Table 1: Isolates of Metarhizium anisopliae used in the experiment.**

| **Treatments** | Isolates of *Metarhizium anisopliae* |
|---|---|
| Control | |
| T2 | IBCB 425 |
| T3 | MBIO1 |
| T4 | MBIO2 |
| T5 | MBIO3 |
| T6 | MBIO4 |
| T7 | MBIO5 |
| T8 | MBIO6 |
| T9 | MBIO7 |
| T10 | MBIO8 |
| T11 | MBIO9 |
| T12 | MBIO10 |
| T13 | MBIO11 |
| T14 | MBIO12 |
| T15 | MBIO13 |
| T16 | MBIO14 |
| T17 | MBIO15 |
| T18 | MBIO16 |
| T19 | MBIO17 |
| T20 | MBIO18 |
| T21 | MBIO19 |
| T22 | MBIO20 |

All treatments contain 20 containers each, totaling an experiment with 440 containers. The containers with the insects were kept in a climatic chamber at ± 26°C, relative humidity 70 ± 10% and photophase of 12 hours.

The samples were destructive and mortality was evaluated daily during 5 days after application of the fungi. The individuals remained alive in the containers during the evaluation day were released in open area for 2 hours. Containers with dead individuals were closed and stored for subsequent counting of dead *C*. *flavipes* individuals per container. The variable measured was the mortality of the parasitoid *C*. *flavipes* in percentage (%). The counting software of *Cotesia flavipes* was used, considering that in each container 1,500 individuals of the parasitoid were initially placed.

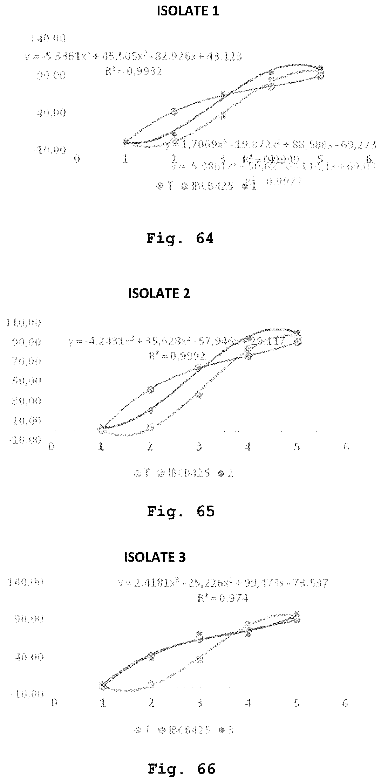

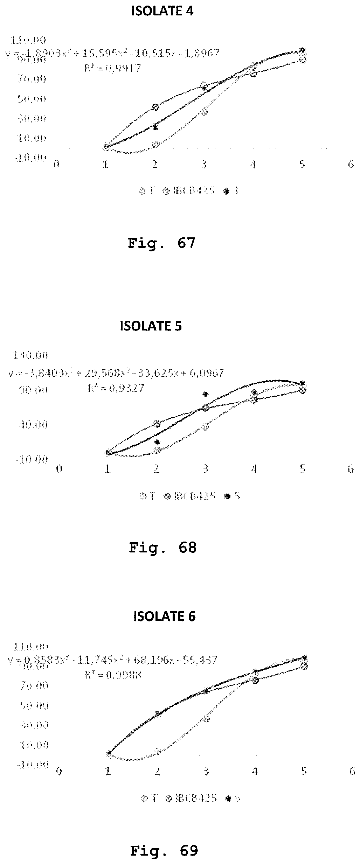

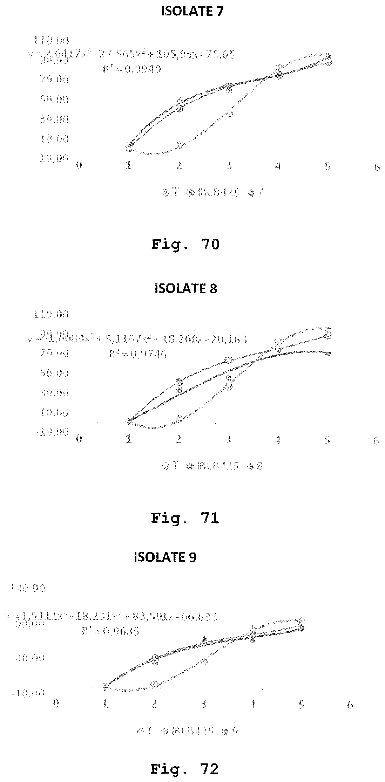

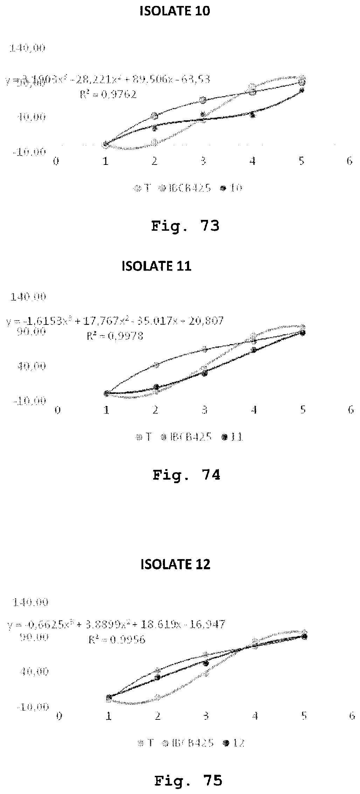

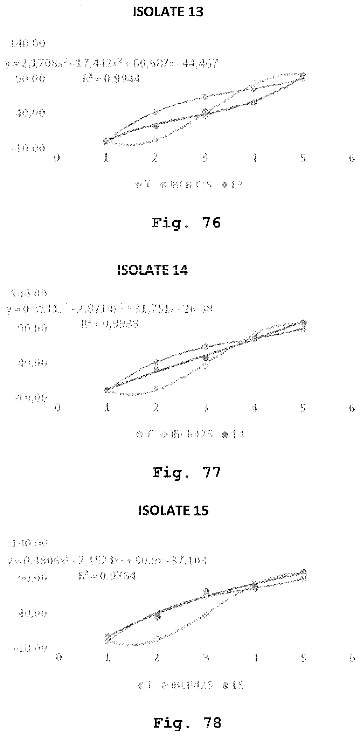

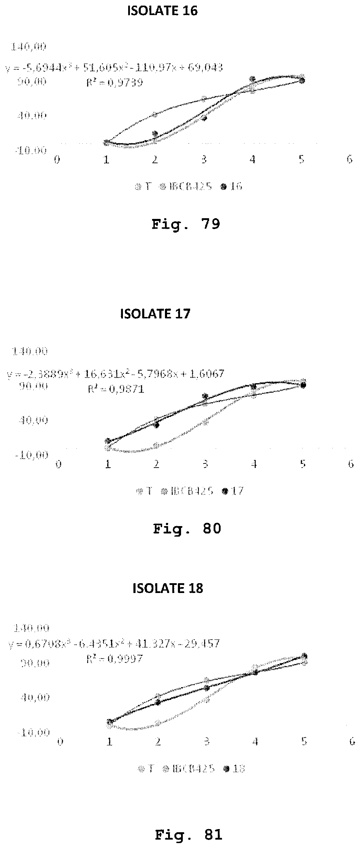

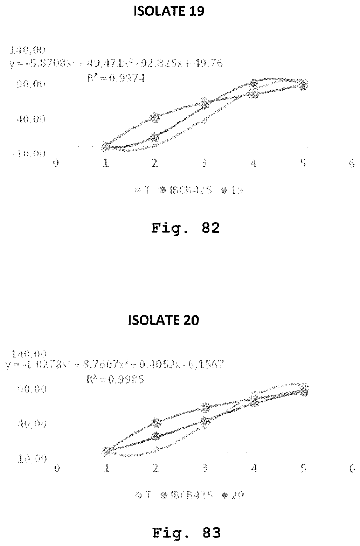

Figures 64 to 83 show graphs of C. *flavipes* mortality rate throughout the five days of evaluation when gray masses (almost hatching) were inoculated. According to the data obtained, the isolates BBIO1, BBI11 and BBI16 (Figures 64, 74 and 79) presented lowest toxicity, which are therefore the most suitable isolates for inoculation of the containers during the manufacturing process of the composition. In treatments MB1O2, MBIO4, MBIO5, MBIO6, MBIO7, MBIO8, MBIO9, MBIO10, MB1O12, MB1O13, MBIO14, MBIO15, MBIO17, MBIO18, MBIO19, MBIO20, the mortality rate over the course of days was high, being these isolates more toxic to the parasitoid and therefore should be avoided in the composition of the product (Figure 65, 66, 67, 68, 69, 70, 71, 72, 73, 75, 76, 77, 78, 80, 81, 82, 83).

The results of this experiment will involve the various stages of biomanufacturing the composition, together with the aggressiveness of the isolates of *Diatraea saccharalis.*

Therefore, under the conditions that the experiment was conducted, it can be concluded that the isolates BBIO1, BBIO11 BBIO16 and are indicated for the composition.

### X - Determination of the Dosage of Metarhizium spp. Spores and Ideal Moment for the Inoculation of Parasitoid Cotesia flavipes for the Development of Composition.

The objective of this experiment was to use different spore concentrations of *Metarhizium spp.* in different stages of development of *Cotesia flavipes* to determine the best dosage with less toxicity to manufacture the composition.

### Breeding Cotesia flavipes

The breeding was performed using standard caterpillar hosts of *Diatraea saccharalis* in the third instar for the breeding of *Cotesia flavipes.* Adult parasitoids with 24 hours old were kept in plastic containers (5 cm x 7 cm) containing a small orifice in the cover of each container enabling adults to leave. Afterwards, the caterpillars were placed close to the orifice, aiming at deposition of parasitoid eggs inside. After parasitism, the caterpillars were transferred to plastic boxes with 19 divisions (30 x 18 x 04 cm) containing artificial diet, where they remained until the pupae formation of the parasitoid. The cocoon masses (pupae) were removed and transferred back to the inoculation cage, where they remained until adults emerged

### Production of Metarhizium spp. Spores

To obtain and produce *Metarhizium spp.,* standard isolate IBCB 425 and MBIO104 of *Beauveria spp.* obtained from the mycology collection of Biofactory of Biological Control Agents Laboratory, were used. The isolates were selected because of their use in sugarcane for controlling pest *Mahanarva posticata,* based on preliminary tests. The isolate was refreshed in third-instar caterpillars of *D. saccharalis.* For the bioassay, the fungi were harvested on oat-based culture medium and incubated in a climatic chamber BOD at 26 ± 1°C and photophase of 12 hour, where they remained for 15 days. The powder produced on the plate was applied in tubes containing rice and kept in a climatic chamber at 26 ± 1°C for a period of ten days. Ready, the tubes were transferred to autoclaved rice bags containing 500 g each. After 3 days in the incubation room, after formation of mycelium, the bags were selected for contamination, only uncontaminated bags were opened and its contents poured into trays which were taken to the "drying room" at a temperature of 21 to 28°C and photophase of at least 16 hours. After 12 to 15 days, i.e., when sporulation of the fungus has been completed, the material was dried to obtain spores. After the period, dry and sporulated, the rice was separated from the fungus powder in a brushing process and the powder stored in plastic bags. The evaluation of the viability of the isolates was determined by counting the germinated and non-germinated conidia under an optical microscope, 16 hours after plating on PDA + A, being taken 100 conidia per plate to obtain the percentage of germination.

The experimental design was factorial: 6 dosages x 3 stages of *Cotesia flavipes* x 2 isolates of *Metarhizium spp.* for each treatment, 4 replicates were used the sample unit being represented by a container containing 30 masses of *Cotesia flavipes.*

For the assembly of the experiment, the spores of the isolates IBCB 425 and MBIO 104 of *Metarhizium spp.* were weighed with the aid of an analytical balance in order obtain a dosage amount of 6 mg, 9 mg, 12 mg, 15 mg and 18 mg per plastic tube. The tubes of each treatment were stored in plastic tubes. The 5 spore dosages were used to inoculate the containers with C. *flavipes* adults in the following stages: white mass, gray masse and hatched mass. The control treatment did not receive inoculation of the fungus. After inoculation, the containers were separated into plastic trays and classified into the following treatments:

**Table 3. Treatments used in this experiment.**

| WHITE MASS | |
|---|---|
| (IBCB 425 and MBIO 104) | |
| TREATMENTS | DOSAGE |
| T1 | Control |
| T2 | 6 mg |
| T3 | 9 mg |
| T4 | 12 mg |
| T5 | 15 mg |
| T6 | 18 mg |
| | |

| GRAY MASS | |
|---|---|
| (IBCB 425 and MBIO 104) | |
| TREATMENTS | DOSAGE |
| T1 | Control |
| T2 | 6 mg |
| T3 | 9 mg |
| T4 | 12 mg |
| T5 | 15 mg |
| T6 | 18 mg |
| | |

| HATCHED MASS | |
|---|---|
| (IBCB 425 and MBIO 104) | |
| TREATMENTS | DOSAGE |
| TI | Control |
| T2 | 6 mg |
| T3 | 9 mg |
| T4 | 12 mg |
| T5 | 15 mg |
| T6 | 18 mg |

All treatments contained 60 containers each, totaling 360 containers for the isolate IBCB 425 and the same amount for the isolate MBIO 104. The trays with the containers containing the insects were kept on shelves in a climatic chamber at ± 26°C, relative humidity 70 ± 10% and photophase of 12 hours.

After 24 hours of inoculation of the fungus, four containers of hatched mass per treatment were taken to evaluate the mortality, where the live insects were released in open area for 4 hours and the dead were closed and stored for later counting. This procedure was repeated daily until the fifth day.

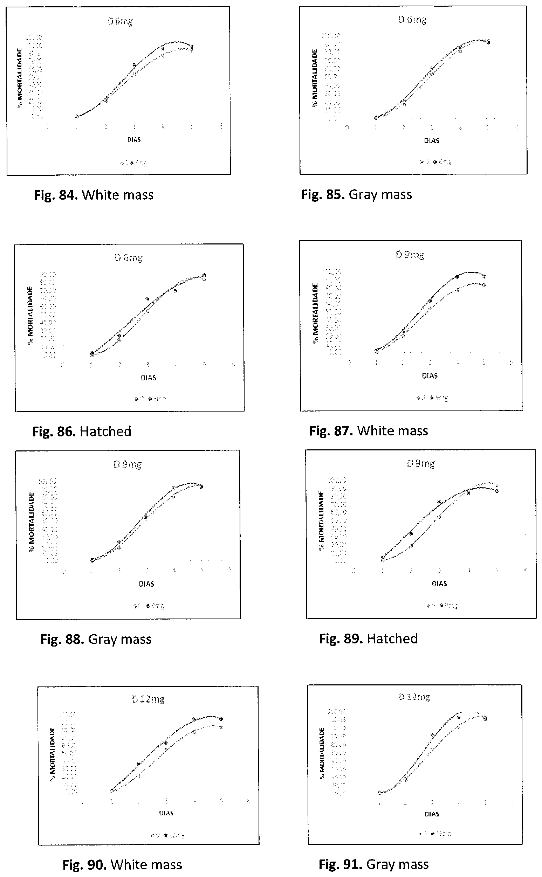

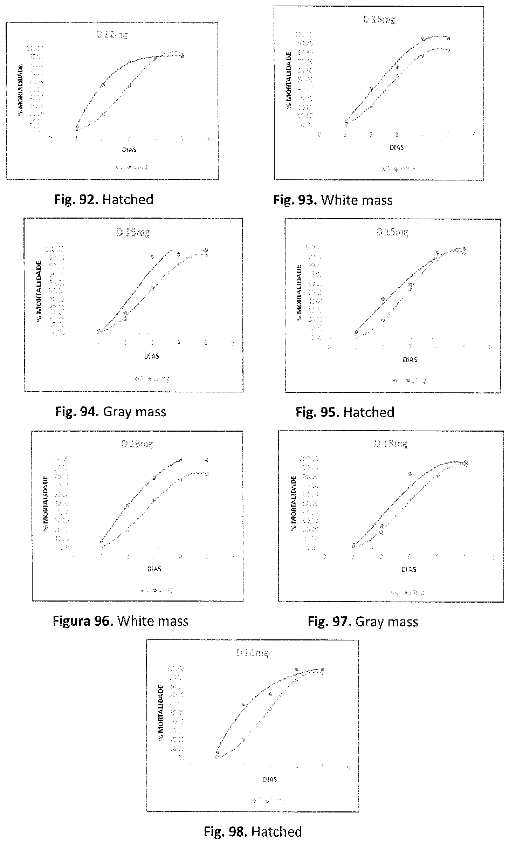

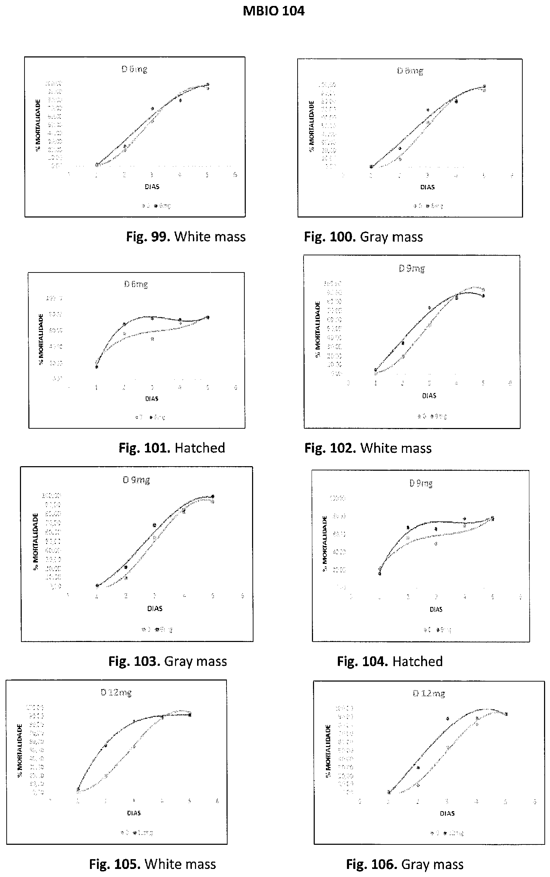

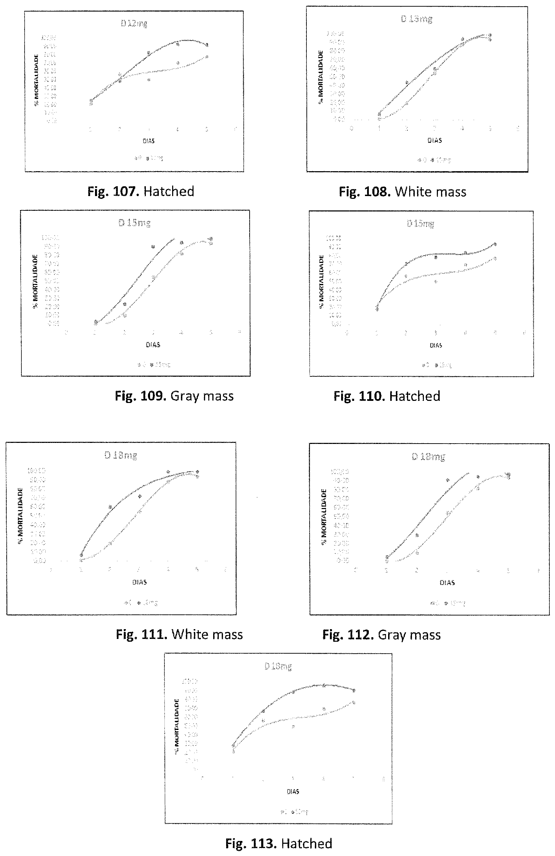

Figures 84 to 98 show graphs of *C. flavipes* mortality rate throughout the five days of evaluation, when they were inoculated with different dosages in white mass, gray mass and hatched mass respectively of isolate IBCB 215. According to the data obtained, the isolate reached a high mortality rate at dosages of 15 and 18 mg in all stages of development of *C. flavipes.* At the dosage of 12 mg, at white mass stage, the insects reached a mortality rate of 50% between the second and third day, remained equal to the control. According to Figures 99 to 113, isolate MBIO 104 achieved a high mortality rate at 15 and 18 mg dosages at all stages of the development of *Cotesia flavipes.* At the dosage of 6 mg in the stages of white and gray mass, the insects reached a percentage of mortality of 60% between the second and third day. At the dosage of 9 mg, at the white mass and gray mass, the insects reached a mortality rate of 70% on the third day, respectively. At 12 mg the percentage of mortality reached 80% for both white and gray mass on the third day.

Therefore, under the conditions in which the experiment was conducted, it can be concluded that the best dosage for the inoculation of the fungus in the insect vector for isolate IBCB 425 is 12mg of *Metarhizium spp.* spores. in *Cotesia flavipes* occurred at an early stage (white matter) of *Cotesia flavipes* development because they did not present significant differences when compared to the Control. For the isolate MBIO 104, it can be concluded that the best dosage for inoculation of the fungus on the insect vector is 9 mg of *Metarhizium spp.* spores at the early stage (white matter) and cocooned adults (gray mass) due the fact that they did not show significant differences when compared to the control, therefore, thus being the optimal methodology for the composition of entomopathogenic fungus with insect vector for the development of the subject composition of the present invention. Therefore, the present experiment defined the timing and dosage of *Metarhizium spp.* in the composition. The development of the composition should also consider such high toxicity and put at least 10% more individuals into the containers. This can be compensated by choosing a less toxic isolate (another activity of this project selected four less toxic isolates than standard IBCB 425).

### XI - Evaluation of Toxicity of Metarhizium anisopliae to Different Stages of Cotesia flavipes.

The objective of this experiment is to determine the best moment of inoculation of the fungus *Metarhizium anisopliae* in containers with *Cotesia flavipes,* aiming to lower toxicity parasitoid in the composition.

*Diatraea saccharalis* caterpillars were used as standard host in the third instar for the breeding of Cotesia flavipes. Adult parasitoids with 24 hours old were kept in plastic containers (5 cm x 7 cm) containing a smaii orifice in the cover of each container enabling adults to leave. Afterwards, the caterpillars were placed close to the orifice, aiming at deposition of parasitoid eggs inside. After parasitism, the caterpillars were transferred to plastic boxes with 19 divisions (30 x 18 x 04 cm) containing artificial diet, where they remained until the pupae formation of the parasitoid. The cocoon masses (pupae) were removed and transferred back to the inoculation cage, where they remained until adults emerged.

To obtain and produce *Metarhizium anisopliae,* standard isolate of *M*. *anisopliae* IBCB 245 obtained from the mycology collection of Biofactory of Biological Control Agents Laboratory, was used. The isolate was refreshed in third-instar caterpillars of *D*. *saccharalis.* For the bioassay, the fungus was harvested on PDA + A (potato dextrose agar + streptomycin sulphate) and after seven days the isolate of *M*. *anisopliae* was again spiked in PDA + A, incubated in a climatic chamber at 26 ± 1°C and photophase of 12 hours, where it remained for ten days. The spores produced were inoculated into tubes containing autoclaved rice and kept in a climatic chamber at 26 ± 1°C, relative humidity of ± 40% and photophase of 12 hours for a period of ten days. Ready, the tubes were transferred to autoclaved rice bags containing 500 g each. After 3 days in the incubation room, after formation of mycelium, the bags were selected for contamination, only uncontaminated bags were opened and its contents poured into trays that were taken to the "drying room" at a temperature of 21 to 28°C and photophase of at least 16 hours. After 12 to 15 days, i.e., when sporulation of the fungus has been completed, the material was dried to obtain spores by brushing. The spores were then stored in plastic bags. The evaluation of the viability of the isolate was determined by counting the germinated and non-germinated conidia under an optical microscope, 16 hours after plating on PDA + A, being taken 100 conidia per plate to obtain the percentage of germination

The experiment was conducted at Biofactory of Biological Control Agents of Bioenergia do Brasil/SA. The experimental design was consisted of 6 treatments (already including the stages with control) with 4 repetitions each treatment. The conidia of isolate IBCB 245 of *Metarhizium anisopliae* were weighed and stored in plastic tubes.

For the assembly of the experiment, the spores were weighed with the aid of an analytical balance so as to obtain an amount of 0.012g (standard predetermined measure) which was stored in a plastic tube. This amount of spores was used to inoculate the containers with adults of *C*. *flavipes.* After inoculation, the containers were separated into plastic trays and classified into treatments: T1 = inoculated newly hatched mass; T2 = inoculated gray mass; T3 = inoculated white mass. The control containers that were not inoculated with fungus constituted the treatments: T4 = newly hatched control mass; T5 = control white mass; T6 = control gray mass. Each treatment contained 20 containers totaling 120 containers per experiment. The containers with insects were maintained in climatic chamber at 26 ± 1°C, relative humidity 70 ± 10% and photophase of 12 hours.

Mortality was evaluated daily during 5 days after application of the fungi. The individuals remained alive in the containers during the evaluation days were released in open area for 2 hours. Containers with dead individuals were closed and stored for subsequent counting of dead *C*. *flavipes* individuals per container. The variable evaluated was the mortality of the parasitoid *C. flavipes* in percentage (%) at different stages of development. The counting software of *Cotesia flavipes* was used, considering that in each container 1,500 individuals of the parasitoid were initially placed.

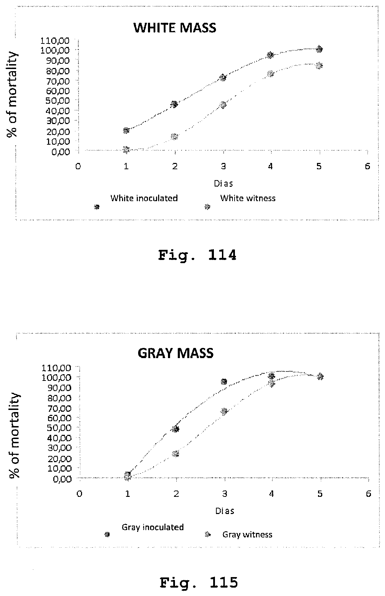

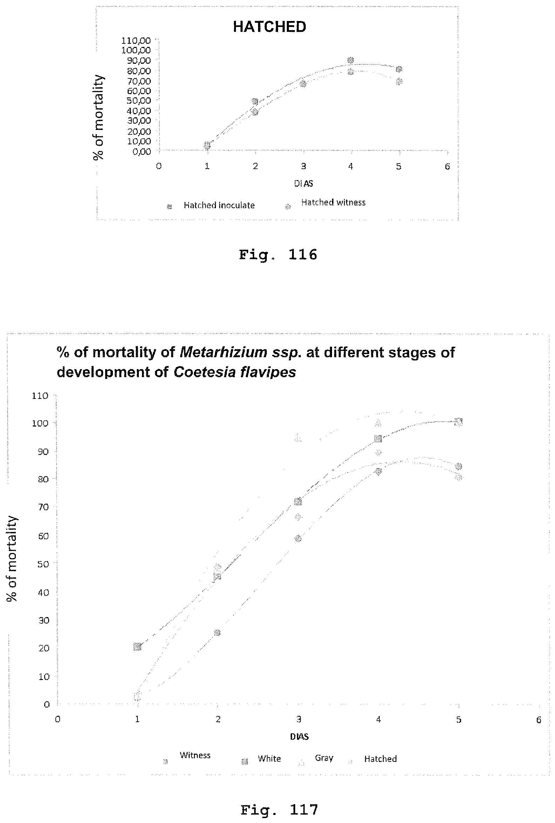

Figures 114 to 116 show graphs of *C*. *flavipes* mortality rate throughout the five days of evaluation when white masses, gray masses and hatched masses were inoculated, respectively. According to the data obtained, the hatched mass (Figure 116) showed the lowest toxicity to *Metarhizium anisopliae* IBCB 245 fungus, which is therefore the most suitable moment for inoculation of the containers during the manufacturing process of the composition. In the treatment with the gray mass, mortality rate reached 100% on forth day with mass inoculated with the fungus, which is the most sensitive stage of the parasitoid and therefore should be avoided as the moment of inoculation (Figure 115). Considering the data presented in Figure 117, it is noted that even in the white masses and the hatched masses inoculated with the fungus there was higher mortality than the masses that did not receive the fungus. Therefore, in addition to promote the selection of less toxic isolates of *C*. *flavipes,* the composition development project needs to consider an inoculation method with the lowest possible contact between fungal spores and adults of the parasitoid. Therefore, the results obtained in this experiment will guide future project activities.

In the conditions under the experiment was conducted, it can be concluded that the best inoculation moment of *Metarhizium anisopliae* in the parasitoid *Cotesia flavipes* was at the hatched mass stage.

### XII - Best Method of Inoculation in Cotesia flavipes with Metarhizium anisopliae

This experiment aimed to evaluate the different methodologies of inoculation of the fungus *Metarhizium anisopliae* in *Cotesia flavipes* to conclude the best method for large production of the composition object of the present invention.

*Diatraea saccharalis* caterpillars were used as standard host in the third instar for the creation of *Cotesia flavipes.* Adult parasitoids with 24 hours old were kept in plastic containers (5 cm x 7 cm) containing a small orifice in the cover of each container enabling adults to leave. Afterwards, the caterpillars were placed close to the orifice, aiming at deposition of parasitoid eggs inside. After parasitism, the caterpillars were transferred to plastic boxes with 19 divisions (30 cm x 18 cm x 04 cm), containing artificial diet, where they remained for 14 days for the formation of pupae of the parasitoid. The cocoon masses (pupae) were removed and transferred back to the inoculation cage, where they remained for six days until the adults completely emerged.

To obtain and produce *Metarhizium anisopliae,* isolate of M. *anisopliae* IBCB 425 obtained from the mycology collection of Biofactory of Biological Control Agents Laboratory was used. The isolate was refreshed in third-instar caterpillars of *D*. *saccharalis.* For the bioassay, the fungus was harvested in a yeast-based culture medium, incubated in a climatic chamber at 26 ± 1°C and photophase of 12 hours, where it remained for 21 days. The powder produced were applied into tubes containing rice and kept in a climatic chamber at 26 ± 1°C for a period of ten days. Ready, the tubes were transferred to autoclaved rice bags containing 500 g each. After seven days the rice was removed from the bags, remaining in the same open room for another seven days. After sporulation, fungus/rice were remained in the "drying room" for seven days at a temperature of at 26 ± 1°C, relative humidity of ± 40%. After this period of sporulation and drying, the rice was separated from the fungus powder in a brushing process and the powder stored in plastic bags. The evaluation of the viability of the isolate was determined by counting the germinated and non-germinated conidia under an optical microscope, 16 hours after plating on PDA + A, being taken 100 conidia per plate to obtain the percentage of germination

The experiment was conducted at Biofactory of Biological Control Agents of Bioenergia do Brasil/SA. The experimental design was completely randomized, containing seven treatments with five replications each. The portion was represented by a container containing 30 gray masses of *C*. *flavipes.*

For the assembly of the experiment, the isolate IBCB 425 of *Metarhizium anisopliae* was weighed with the aid of an analytical balance in a concentration of 50 mg per plastic tube. The container with *C*. *flavipes* adults were exposed to the fungus in different methods, separated and classified in plastic trays into treatments: T1 - containers without the fungus (Control); T2 - dusting of containers with 50 mg of spores from a plastic tube (50 mg) each; T3 - containers sprayed with a solution of 25 mL of autoclaved water + 7.5 mL of molasses + 50 mg of pure spores; T4 - containers inoculated with a pierced capsule at both ends containing 50 mg of pure spores and the containers were not stirred; T5 - containers inoculated with a pierced capsule at both ends containing 50 mg of pure spores were stirred after inoculated; T6 - containers inoculated with a pierced capsule at both ends containing 50 mg of pure spores, the containers were stirred at the day after hatching individuals and T7 - a double sided tape containing 50 mg of pure *Metarhizium anisopliae* spores to the inside cover of the container, the containers being then capped. All treatments contained 5 containers each, totaling 35 containers. The trays with containers of *Cotesia flavipes* were kept in a climatic chamber at ± 26°C, relative humidity 70 ± 10% and photophase of 12 hours.

After 24 hours of fungus inoculation, 20 caterpillars were inoculated per container of each treatment and parasitism was evaluated daily.

It is waited 72 hours after fungal inoculation and 35 containers were evaluated. For this purpose, 72 hours after inoculation of the fungus, live individuals were transferred to empty containers for further evaluation of dead, living individuals and non-hatched cocoons.

After inoculating the caterpillars, 10 remaining individuals from each container were placed on Petri dishes with BDA medium for colony growth evaluation, and 20 individuals from each container were separated from plastic tubes, 10 males and 10 females in each tube. For counting in Neubauer's chamber of conidia per individual.

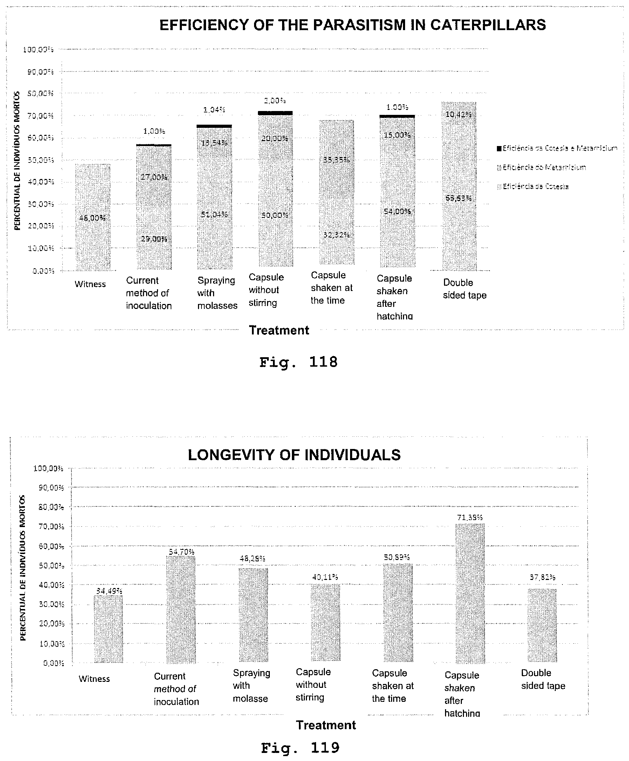

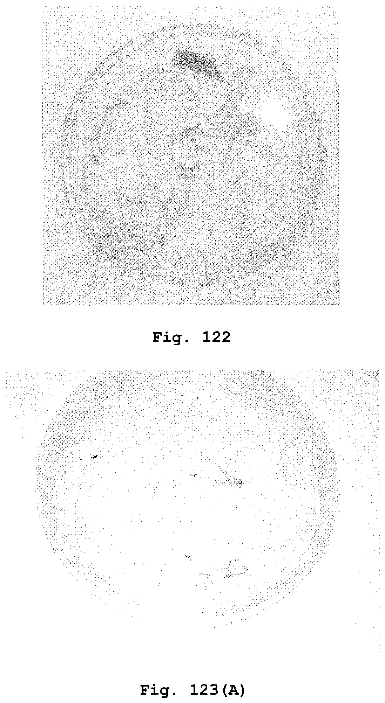

Figures 118 to 121 show graphs with results of the experiments on the efficiency of parasitism on caterpillars, longevity of individuals, growth of colonies and counts of conidia per individual of *C*. *flavipes* respectively. According to the data obtained on the efficiency of parasitism (Figure 118), the double-sided capsule and non-agitated methods reached a percentage of total parasitism of 76.04% and 72%, and the latter presented parasitism of *Cotesia flavipes* and *Metarhizium anisopliae* in the same 2% host (Figure 122). The data obtained for longevity of *C*. *flavipes* (Figure 119) provided mortality of 37.82% of individuals in the double-sided tape method, indicating a lower mortality compared even with the current inoculation method, which was 54.70%.

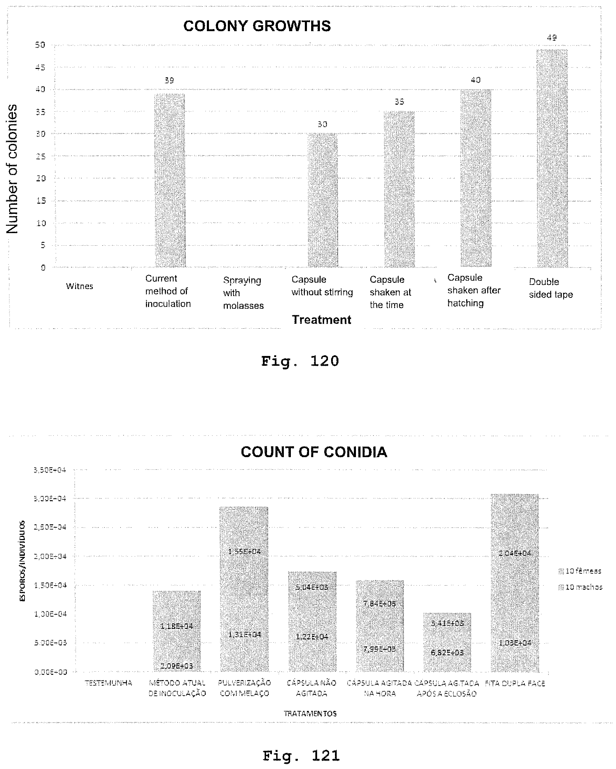

The colony growth (Figure 120) show that there was no growth in spray treatment with molasses, since the treatment with double-sided tape (49 colonies), stirred capsule after hatching (40 colonies) and present method (39 colonies) gave the greater results.

The data observed in conidia per individual plot (Figure 121) shows that C. *flavipes* males also carry substantial amounts of spores, therefore males and females are effective for dissemination and vectorization of entomopathogenic fungi.

In the conditions under which the experiment was conducted, it can be concluded that the best method for the inoculation of *Metarhizium anisopliae* in the parasitoid *Cotesia flavipes* was the double-sided tape, due to the satisfactory results in all evaluations: parasitism efficiency in caterpillars, longevity of individuals, colony growth and counting of conidia per individual, thus being ideal for the manufacturing process of the composition object of the present.

### XIII - QUALI-QUANTITATIVE COMPOSITION OF "DOUBLE" COMPOSITION WITH AND WITHOUT DEVICE.

The device used in the composition is a capsule intended to carry the spores of the fungus + pesticidally acceptable carrier to the wasp. The shell consists of gelatin or starch by two cylindrical portions open at one end, with a hemispheric bottom with a capacity of 100 mg.

### Process of inoculation of the fungus spores + pesticidally acceptable carrier in the wasp happens in two ways:

### Through dusting:

Fungus spores will be weighted together with pesticidally acceptable carrier following the amounts described in the table above (without device) and will sprinkled under the wasp masses (cocoons) which are ready to hatch which are packaged in plastic containers.

### Through device/capsule:

Fungus spores will be weighed together with the pest acceptable carrier following the amounts described in the table above (with device) and will be put into a gel or starch capsule with a capacity of 100 mg. This capsule received an orifice at each end so that when the product goes into field, it is agitated for the spores of the fungus + pesticidally acceptable carrier to exit through the orifices and spread under the Cotesia masses. After making the orifices in the capsule, it will be placed inside a plastic container containing the *Cotesia* (cocoons).

**COMPOSITION WITHOUT DEVICE.**

| **QUALI-QUANTITATIVE COMPOSITION ANALYSIS** | | | | | |
|---|---|---|---|---|---|
| **PESTICIDALLY ACCEPTABLE CARRIER** | **FUNGUS** | | **WASP** | | **PROPORTION** |
| Quantity (grams) | Quantity (grams) | No. of spores | No. of individuals / container | Sexual Ratio (%) | No. of Spores / individual |
| 0.005 | 0.005 | 2.8 x 10⁸ | 500 | 60 ♀-40 ♂ | 4 to 6 x 10⁵ spores : 1 wasp |
| 0.007 | 0.007 | 3.9 x 10⁸ | 750 | 60 ♀-40 ♂ | 4 to 6 x 10⁵ spores : 1 wasp |
| 0.015 | 0.015 | 8.5 x 10⁸ | 1,500 | 60 ♀-40 ♂ | 4 to 6 x 10⁵ spores : 1 wasp |

| **TABLE OF VARIATION (MAXIMUM LIMIT AND MINIMUM LIMIT) OF THE QUANTITY OF *COTESIA* INDIVIDUALS AND FUNGUS / PESTICIDALLY ACCEPTABLE CARRIER.** | | | | | | |
|---|---|---|---|---|---|---|
| **MIN / MÁX** | **PESTICIDALLY ACCEPTABLE CARRIER** | **FUNGUS** | | **WASP** | | **PROPORTION** |
| | Quantity (grams) | Quantity (grams) | N° of spores | N° of individuals / container | Sexual Ratio (%) | N° of Spores / individual |
| MINIMUM LIMIT | 0.004 | 0.004 | 2.2 x 10⁸ | 400 | 20 ♀-80 ♂ | 4 to 6 x 10⁵ spores : 1 wasp |
| MAXIMUM LIMIT | 0.020 | 0.020 | 1.1 x 10⁹ | 2,000 | 80 ♀ - 20 ♂ | 4 to 6 x 10⁵ spores : 1 wasp |

**QUALI-QUANTITATIVE COMPOSITION OF DOUBLE COMPOSITION WITH DEVICE**

| **QUALITY-QUANTITATIVE COMPOSITION ANALYSIS** | | | | | |
|---|---|---|---|---|---|
| **PESTICIDALLY ACCEPTABLE CARRIER** | **FUNGUS** | | **WASP** | | **PROPORTION** |
| Quantity (grams) | Quantity (grams) | No. of spores | No. of individuals / container | Sexual Ratio (%) | No. of Spores / individual |
| 0.025 | 0.025 | 1.4 x 10⁹ | 500 | 60 ♀-40 ♂ | 1 to 3 x 10⁶ spores : 1 wasp |
| 0.037 | 0.037 | 2.0 x 10⁹ | 750 | 60 ♀-40 ♂ | 1 to 3 x 10⁶ spores : 1 wasp |
| 0.075 | 0.075 | 4.2 x 10⁹ | 1,500 | 60 ♀-40 ♂ | 1 to 3 x 10⁶ spores : 1 wasp |

| **TABLE OF VARIATION (MAXIMUM LIMIT AND MINIMUM LIMIT) OF THE QUANTITY OF COTESIA INDIVIDUALS AND FUNGUS / PESTICIDALLY ACCEPTABLE CARRIER.** | | | | | | |
|---|---|---|---|---|---|---|
| **MIN / MÁX** | **PESTICIDALLY ACCEPTABLE CARRIER** | **FUNGUS** | | **WASP** | | **PROPORTION** |
| | Quantity (grams) | Quantity (grams) | No. of spores | No. of individuals / container | Sexual Ratio (%) | No. of Spores / individual |
| MINIMUM LIMIT | 0.020 | 0.020 | 1.1 x 10⁹ | 400 | 20 ♀-80 ♂ | 1 to 3 x 10⁶ spores : 1 wasp |
| MAXIMUM LIMIT | 19 | 19 | 5.6 x 10⁹ | 380,000 | 80 ♀-20 ♂ | 1 to 3 x 10⁶ spores : 1 wasp |

| **TABLE OF VARIATION (PREFERENTIAL MAXIMUM LIMIT AND MINIMUM LIMIT) OF THE QUANTITY OF *COTESIA* INDIVIDUALS AND FUNGUS / PESTICIDALLY ACCEPTABLE CARRIER.** | | | | | | |
|---|---|---|---|---|---|---|
| **MIN** / **MÁX** | **PESTICIDALLY ACCEPTABLE CARRIER** | **FUNGUS** | | **WASP** | | **PROPORTION** |
| | Quantity (grams) | Quantity (grams) | No. of spores | No. of individuals / container | Sexual Ratio (%) | No. of Spores / individual |
| MINIMUM LIMIT | 0.025 | 0.025 | 1.1 x 10⁹ | 500 | 20 ♀ - 80 ♂ | 1 to 3 x 10⁶ spores: 1 wasp |
| MAXIMUM LIMIT | 0.100 | 0.100 | 5,6 x 10⁹ | 2,000 | 80 ♀ - 20 ♂ | 1 to 3 x 10⁶ spores : 1 wasp |

| **TABLE OF VARIATION (PREFERENTIAL MAXIMUM LIMIT AND MINIMUM LIMIT) OF THE QUANTITY OF *COTESIA* INDIVIDUALS AND FUNGUS / PESTICIDALLY ACCEPTABLE CARRIER.** | | | | | | |
|---|---|---|---|---|---|---|
| **MIN / MÁX** | **PESTICIDALLY ACCEPTABLE CARRIER** | **FUNGUS** | | **WASP** | | **PROPORTION** |
| | Quantity (grams) | Quantity (grams) | No. of spores | No. of individuals / container | Sexual Ratio (%) | No. of Spores / individual |
| MINIMUM LIMIT | 7.5 | 7.5 | 1.1 x 10⁹ | 150,000 | 20 ♀-80 ♂ | 1 to 3 x 10⁶ spores: 1 wasp |
| MAXIMUM LIMIT | 15 | 15 | 5.6 x 10⁹ | 300,000 | 80 ♀-20 ♂ | 1 to 3 x 10⁶ spores: 1 wasp |

### Device Description

The device used in the composition is capsule intended to carry the fungus spores + pesticidally acceptable carrier to the wasp. The shell consists of gelatin or starch by two cylindrical portions open at one end, with a hemispheric bottom with a capacity of 100g.

### Process for inoculation fungus spores + pesticidally acceptable carrier in wasp via dusting:

The fungus spores will be weighted together with pesticidally acceptable carrier following the amounts described in the table above (without device) and will be dusted over the wasp masses (cocoons) which are ready to hatch and are packaged in plastic containers.

### Through Device/Capsule:

The fungus spores will be weighted together with pesticidally acceptable carrier following quantities described in the table above (with device) and will be packed into a gel or starch capsule with a capacity of 100 mg. This capsule received an orifice at each end so that when the product goes into the field, it is agitated for the fungal spores + pesticidally acceptable carrier to exit the through orifices and spread under the masses (cocoons) of *Cotesia.* After making orifices in the capsule, it will be placed inside a plastic container containing masses (cocoons) of *Cotesia.*

### PESTICIDELY ACCEPTABLE CARRIER:

Baby powder
Caulin
Limestone
Maize starch
Cassava starch
Rice flour
Rice grain

Thus, although only some embodiments and exemplifications of the present invention have been shown, it will be understood that various omissions, substitutions and changes in the composition of parasitoid insects and entomopathogenic fungi for biological control of agricultural pests, as well as the methods of the present invention can be made by a person skilled in the art without departing from the spirit and scope of the present invention.

It is expressly provided that all combinations of elements that perform the same function in substantially the same way to achieve the same results are within the scope of the invention. Substitutions of elements from one described embodiment to another are also fully intended and contemplated.

### REFERENCES

ALVES, R.T.; FARIA, M.R. de. Situação atual do uso de fungos entomopatogênicos no Brasil (Parte I - 10/11/2003).
ST. LEGER, R.J., JOSHI, L., BIDOCHKA, M.J., ROBERTS, D.W. (1996) Construction of an improved mycoinsecticide overexpressing a toxic protease. Proc. Natl. Acad. Sci. USA. 50:183-212.
ALVES, S.B. Patologia e controle microbiano: vantagens e desvantagens. In: Controle microbiano de insetos. Piracicaba: FEALQ, 1998b. p.21-37
ROBINSON, R. K. Studies on penetration of insect in tegument by fungi. Pest Art. New Summ, v. 12, p. 131 - 142, 1966.
Barson, G., 1977. Laboratory evaluation of Beauveria bassiana as a pathogen of the larval stage of the large elm bark beetle, Scolytus scolytus. J. Invertebr. Path. 29: 361-366
Ignoffo, C.M. 1981. The fungus Nomuraea rileyi as a microbial insecticide, p. 513-538. In H.D. Burgers (ed.), Microbial control of pests and plant diseases: 1970-1980. London, Academic Press, 949p.
BERTI FILHO, E. & CIOCIOLA, A. I. 2002. Parasitoides ou predadores? Vantagens e desvantagens. In: PARRA, J. R. P.; BOTELHO, P. S. M.; CORREA-FERREIRA, B. S. & BENTO, J. M. S. eds. Controle biologico no Brasil: parasitoides e predadores. São Paulo, Manole. p.29-41.
MOUTIA, L. A.; COURTOIS, C. M. Parasites of the moth- borers of sugar-cane inMauritius. Bulletin of Entomological Research, London, v. 43, p. 325-335, 1952
Gallo, D., O. Nakano, S.S. Neto, R.P.L. Carvalho, G.C. Batista, E.B. Filho, J.R.P. Parra, R.A. Zucchi, S.B. Alves, J.D. Vendramim, L.C. Marchini, J.R.S. Lopes & C. Omoto. 2002. Entomologia agricola. Piracicaba, FEALQ, 920p.
MACEDO, N. New strains of Apanteles flavipes was imported to increase its adaptative potential in the Southern region of Brazil. Entomology Newsletter, Araras, v. 4, n. 1, p.11712, 1978.

## Claims

1. A composition of biological control agents, **characterized by** comprising:
400 to 380,000 individuals/recipient of least one predator or parasitoid insect population for dissemination and vectorization of a species of entomopathogenic fungus;
0.004 g to 3.8 g of a population of entomopathogenic fungus;
and 0.004 g to 3.8 g of pesticidally acceptable carrier.

2. A composition of biological control agents, **characterized by** comprising:
400 to 380,000 individuals/recipient of least one predator or parasitoid insect population for dissemination and vectorization of a species of entomopathogenic fungus;
0.20 g to 19 g of a population of entomopathogenic fungus;
0.20 g to 19 g of pesticidally acceptable carrier;
and a capsule intended to carry fungal spores plus the carrier to the wasp.

3. Composition according to claim 1, **characterized in that** the fungus has 2.2 x 10⁸ to 1.1 x 10⁸ spore number.

4. Composition according to claim 1, **characterized in that** the proportion of spore number per wasp varies from 4 to 6 x 10⁵ spores per wasp.

5. Composition according to claim 2, **characterized in that** the fungus has 1.1 x 10⁹ to 5.6 x 10⁹ spore number.

6. Composition according to claim 2, **characterized in that** the proportion of spore per wasp varies from 1 10⁶ to 3 x 10⁶ spores per wasp.

7. Composition according to claim 1 or 2, **characterized in that** the amount of individuals/recipient of at least one predator or parasitoid insect population for dissemination and vectorization of an entomopathogenic fungal species is preferably in the range between 150,000 to 300,000.

8. Composition according to claim 1 or 2, **characterized in that** the amount of individuals/recipient of at least one predator or parasitoid insect population for dissemination and vectorization of an entomopathogenic fungal species is still more preferably in the range between 500 to 2,000.

9. Composition according to claims 1 and 2, **characterized in that** the predator/parasitoid belongs to the family *Braconidae* and genus *Apanteles, Cotesia;* family *Coccinellidae* with genus *Cryptolaemus, Cycloneda, Eriopis* and *Hyppodamia;* family *Syrphidae* with genus *Salpingogaster* and family *Trichogrammatidae* with genus *Trichogramma.*

10. Composition according to claim 9, **characterized in that** the predator/parasitoid preferably belongs to the family *Braconidae* with genus *Cotesia.*

11. Composition according to claim 9, **characterized in that** the population of predator and/or parasitoid is a population of dissemination and/or vectorization.

12. Composition according to claims 1 and 2, **characterized in that** the entopathogenic fungus belongs to family *Entomophthoraceae* with genus *Batkoa* and *Massospora*; family *Nectriaceae* with genus *Metarhizium,* family *Clavicipitaceae* with genus *Beauveria* and *Nomuraea;* family *Trichocomaceae* with genus *Paecilomyces.*

13. Composition according to claim 12, **characterized in that** the entopathogenic fungus preferably belongs to family *Clavicipitaceae* with genus *Beauveria* and preferably to family *Nectriaceae* with genus *Metarhizium.*

14. Composition according to claims 1 to 13, **characterized in that** the fungus remains associated with the wasp, and the wasp acts as a vector of the fungus for agricultural pests.

15. Composition according to claims 1 to 14, **characterized in that** the predator or parasitoid insects go directly to the target (pest) carrying entomopathogenic fungal spores in their body.

16. Composition according to claims 1 to 15, **characterized in that** the dosage for inoculation of the fungus in the insect vector is 12 mg of *Beauveria spp.* spores in the early stage (white mass) of development of *Cotesia flavipes* or during the onset of the hatching.

17. Composition according to claims 1 to 16, **characterized in that** in said composition of 1,500 individuals, approximately 1,365 individuals have the potential to carry out the parasitism, and also a double parasitism, with the collaboration of wasp and fungus, simultaneously.

18. Composition according to claims 1 to 17, **characterized in that** the entomopathogenic fungus species has at least 70% viable spores.

19. Composition according to claims 1 to 18, **characterized in that** said composition is maintained at 8°C to 30°C until 4 days.

20. Composition, according to claims 1 to 19, **characterized in that** said composition is maintained in the form of a three-dimensional culture on the carrier.

21. Composition according to claims 1 to 20, **characterized in that** the pesticidally acceptable carrier belongs to the group of talc; kaolin; limestone; maize starch; manioc starch; rice flour and grain rice.

22. A method of dissemination and/or vectorization of an entomopathogenic fungus **characterized by** comprising the following steps:
a) providing a composition as defined by claims 1 to 21; and
b) enabling the adhesion of the entomopathogenic fungus in individuals of the predator and/or parasitoid insect population.

23. Method of dissemination and/or vectorization of an entomopathogenic fungus according to claim 22, **characterized in that** the inoculation of the fungal spores plus the acceptable carrier in the wasp may occur via dusting or via device/capsule.

24. Method of dissemination and/or vectorization of an entomopathogenic fungus according to claim 22, **characterized in that** in the process via dusting, the fungal spores are weighed together with the pesticidally acceptable carrier and are sprinkled on the masses (cocoons) of wasp ready to hatch that are packaged in plastic cups.

25. Method of dissemination and/or vectorization of an entomopathogenic fungus according to claim 22, **characterized in that** in the device/capsule process, the fungal spores will be weighed together with the pesticidally acceptable carrier and will be packaged in a gel or starch capsule having a capacity of 100 mg, wherein said capsule receives a hole at each end so that when the product is in the field, it will be agitated so that the fungal spores fungus plus the pesticidally acceptable carrier exit through the holes and spread on the masses (cocoons) of wasp (*Cotesia*).

26. Method of dissemination and/or vectorization of an entomopathogenic fungus according to claim 25, **characterized in that** after making the holes in the capsule, it will be placed inside a plastic cup containing masses (cocoons) of wasp (*Cotesia*).

27. Method for biological control of agricultural pests **characterized by** comprising applying an amount of the composition as defined by claims 1 to 21 in the vicinity, such as at the base, of a number of agricultural crop plants, preferably individually with respect to each plant of agricultural crop.

28. Method for biological control of agricultural pests according to claim 27, **characterized in that** said amount of the composition is from 1 mL to 10 mL, preferably from 2 mL to 5 mL.

29. Use of composition as defined by claims 1 to 21 **characterized by** being for the control of an infestation pest in agricultural crops.

30. Use of the composition according to claim 29, **characterized in that** said pest belongs to the group *Agrotis sp*; *Alabama argillacea*; *Anagasta kuehniella*; *Anticarsia gemmatalis; Aphis gossypii*; *Bemisia Tabassi*; *Deois flavopicta*; *Diatraea saccaralis*; *Helicoverpa*; *Heliothis virescens; Mahanarva fimbriolata*; *Mahanarva posticata*; *Mythimna unipuncta*; *Myzus persicae*; *Neoleucinodes elegantalis; Sacadodes pyralis; Spodoptera frugiperda; Tuta absoluta; Zulia entreariana.*

31. Use of composition as defined by claim 29, **characterized in that** said agricultural crop belongs to the group consisting of sugarcane (*Saccharum officinarum*); sorghum (*Sorghum bicolor*); rice (*Oryza sativa*); corn (*Zea mays*); wheat (*Triticum aestivum*); barley (*Hordeum vulgare*); tomato (*Solanum lycopersicum*); soybean (*Glycine max*); cotton (*Gossypium hirsutum*); beans (*Phaseolus vulgaris*); pastures (*Brachiaria spp., Panicum maximum, Andropogon gayanus* and *Cynodon dactylon*); coffee (*Coffea arabica* and *Coffea canephora).*
